# EUROPÄISCHE PATENTSCHRIFT

(11) **EP 2 171 173 B1**
(45) Veröffentlichungstag und Bekanntmachung des Hinweises auf die Patenterteilung: **06.07.2016**
(21) Anmeldenummer: 08715513.1
(22) Anmeldetag: 22.02.2008
(51) Int. Cl.: E04F 11/18

(54) **GLASSCHEIBEN-GELÄNDER**
GLASS-PANELLED BALUSTRADE
GARDE-CORPS EN PANNEAU DE VERRE

(30) Priorität: 02.07.2007 DE 202007009239 U
(43) Veröffentlichungstag der Anmeldung: 07.04.2010
(73) Patentinhaber: Bangratz, René, 74076 Heilbronn (DE)
(72) Erfinder: Bangratz, René, 74076 Heilbronn (DE)
(74) Vertreter: Clemens, Gerhard
(86) Internationale Anmeldenummer: PCT/DE2008/000321
(87) Internationale Veröffentlichungsnummer: WO 2009/003431

(56) Entgegenhaltungen:
- DE-A1- 2 605 771
- DE-A1- 3 841 796
- DE-B3- 10 338 816
- DE-U1- 20 111 872
- GB-A- 2 390 404
- US-A1- 2002 195 595
- US-A1- 2006 070 318

## Beschreibung

### TECHNISCHES GEBIET

Die Erfindung betrifft ein Geländer, das in ihrem Fußbereich eingespannte Glasscheiben enthält und bei dem daher auf Geländerpfosten verzichtet werden kann.

### STAND DER TECHNIK

US 2002/195595 offenbart ein Glasscheiben-Geländer der eingangs genannten Art bekannt, mit allen Merkmalen des Oberbegriffs von Anspruch 1. Jebe der Vorhandenen Glasscheiben dieser Geländerkonstruktion wird mit ihrem unteren Längsrandbereich in ein U-Profil eingeklebt. Glasscheibe und U-Profil bilden ein fest zusammengefügtes Konstruktions- und Montagemodul, welches in ein bauseitig angeordnetes Befestigungsprofil eingehängt werden kann. Die Montage eines solchen Geländers ist nicht mit beliebigen Glasscheiben sondern nur mit den die Scheiben bereits enthaltenden Modulen möglich. Da U-Profil und Glasscheibe ein festes Bauteil darstellen, müssen U-Profil und Glasscheibe eines jeweiligen Moduls immer gleich lang sein, was bei der Konstruktion (Montage) und bei Reparatur- und Austauscharbeiten berücksichtigt werden muss. Außerdem umfasst das bei der Montage zur berücksichtigende Modulgewicht nicht nur das Gewicht der Glasscheibe sondern immer auch das Gewicht des U-Profils.

### GARSTELLUNG DER ERFINDUNG

Ausgehend von diesem Stand der Technik liegt der Erfindung die Aufgabe zugrunde, ein montagefreundliches, wirtschaftlich günstiges und technisch einwandfreies Glasscheiben-Geländer anzugeben.

Diese Erfindung ist durch die Merkmale der nebengeordneten Ansprüche 1 und 39 gegeben. Weiterbildungen der Erfindung sind Gegenstand von weiteren

Die Erfindung ermöglicht es, bei der Montage eines Glasscheiben-Geländers die Glasscheiben und die diese eingespannt haltenden U-Profile unabhängig voneinander zu bewegen. Die jeweils zu bewegenden vergleichsweise geringen Lasten ermöglichen dadurch eine problemlose manuelle Montage.

Erfindungsgemäß ist vorgesehen, die einzelne Glasscheibe, die auch aus mehreren, beispielsweise zwei, fest miteinander verbundenen wie miteinander verklebten Einzelscheiben bestehen kann, in das sie eingespannt haltende U-Profil lose einzusetzen, und dann entweder das U-Profil mit einem fließ- oder pastenförmigen aushärtbaren Füllmaterial auszufüllen und/oder die Glasscheibe mittels beispielsweise keilartiger Einsätze kippsicher und dabei exakt ausgerichtet in dem betreffenden U-Profil anzuordnen. Zwischen den Einsätzen vorhandene Freiräume können mit Füllmaterial ausgefüllt werden.

Vor dem Einsetzen einer Glasscheibe in ein U-Profil kann dieses U-Profil bereits an einem bauseitig fest angeordneten Befestigungspröfil befestigt wie insbesondere eingehängt befestigt sein. Die Befestigung kann auch mittels Schraub- oder Schweißverbindungen hergestellt werden.

Bei der klemmenden Anordnung einer Glasscheibe in einem U-Profil kann der Fußbereich der Glasscheibe mit einem leichten, beispielsweise aus Kunststoff bestehenden U-förmigen Schutzprofil eingefasst werden. Keile können dann so eingesetzt werden, dass sie nicht unmittelbar gegen die Glasoberfläche drücken. Dadurch kann die Glasoberfläche nicht verletzt werden, was ansonsten die Bruchgefahr der Scheibe wesentlich erhöhen würde. Keile können aus beliebig festem, auch metallischem Material hergestellt werden.

Nach in der Zeichnung dargestellten Ausführungsbeispielen können die Keile zwischen U-Profil und Profilkörpern, die als U-förmiges Schutzprofil ausgebildet sein können, platziert werden. Es ist auch möglich, einen oder mehrere Keile in einen in einem seitlichen Profilkörper vorgesehenen Schlitz einzuführen. Im letzteren Fall wird der jeweilige Profilkörper gegen den einen oder die beiden Schenkel des U-Profils gedrückt.

Insbesondere die erfindungsgemäße Verkeilmethode erlaubt es bei einem Bruch der Glasscheibe, lediglich die Glasscheibe zu erneuern; das U-Profil braucht dabei nicht mit ausgetauscht zu werden.

In ein beliebig langes U-Profil können auch mehrere Scheiben eingesetzt werden. Dabei kann eine Scheibe das U-Profil auch in dessen Längsrichtung überragen. Der überragende Teil der Scheibe könnte in einem weiteren U-Profil Platz finden.

Weitere Ausgestaltungen und Vorteile der Erfindung sind den in den Ansprüchen ferner ausgeführten Merkmalen sowie den nachfolgenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: einen Schnitt durch eine erste Ausführungsform der eine Glasscheibe eingespannt haltenden Konstruktion eines Glasscheiben-Geländers nach der Erfindung,
- Fig. 2: eine teilweise perspektivische Darstellung der bei dem Geländer gemäß Fig. 1 vorhandenen Bauteile,
- Fig. 3: eine Darstellung ähnlich der Fig. 1, mit einer seitlich aus der Längsachse des U-Profils versetzt festgeklemmten Glasscheibe,
- Fig. 4: einen Schnitt durch einen bei dem Geländer nach Fig. 3 zu verwendenden Keil,
- Fig. 5: einen Schnitt durch einen Abschnitt einer zweiten Ausführungsform eines Keils,
- Fig. 6: einen Schnitt eines Geländers ähnlich der Fig. 3, in einem nicht Keile enthaltenden Längsabschnitt des Geländers,
- Fig. 7: eine schematische Schnittdarstellung eines erfindungsgemäßen Geländers, das an einer an der Stirnseite eines massiven Bauteils bäuseits befestigten Unterkonstruktion befestigt ist,
- Fig. 8: eine schematische Schnittdarstellung eines erfindungsgemäßen Geländers, das an einer Unterkonstruktion bauseits befestigt ist, die an der Oberseite und an der Stirnseite eines massiven Bauteils vorhanden ist,
- Fig. 9: eine schematische Schnittdarstellung eines an der Oberseite eines massiven Bauteils befestigten erfindungsgemäßen Geländers,
- Fig. 10: einen Schnitt durch eine weitere Ausführungsform der Erfindung,
- Fig. 11 und 12: Schrittdarstellungen von unterschiedlichen kurzen Keilen für das Geländer nach Fig. 10,
- Fig. 13 und 14: Schnittdarstellungen von unterschiedlichen langen Keilen für das Geländer nach Fig. 10,
- Fig. 15: einen Schnitt durch eine weitere Ausführungform eines erfindungsgemäßen Geländers, bei dem die Glasscheibe nicht durch U-förmige Profile und Keile sondern durch eine Vergussmasse in einem U-Profil eingespannt gehalten ist,
- Fig. 16: eine Schnittdarstellung einer in einem kantigen U-Profil ohne Darstellung ihrer Einspannung einsitzenden Glasscheibe, wobei das U-Profil mittels einer Schweißverbindung seitlich an einer ortsfesten Unterkonstruktion befestigt ist,
- Fig. 17: eine zur Fig. 16 ähnliche Darstellung, bei der das kantige U-Profil stehend auf einer ortsfesten Unterkonstruktion angeschweißt ist,
- Fig. 18: eine Darstellung ähnlich der Fig. 9, mit einem eine ebenfalls kantige Umbiegung aufweisenden kantigen U-Profil,
- Fig. 19: eine Darstellung ähnlich der Fig. 2, mit einem mehrteiligen U-förmigen U-Profil,
- Fig. 20: einen Schnitt durch eine weitere Ausführungsform, ähnlich der Fig. 10, mit einem mehrteiligen U-förmigen U-Profil und mit unterschiedlich kurzen und langen Keilen,
- Fig. 21: eine Darstellung ähnlich der Fig. 3, mit einem kantigen U-Profil und mit weiteren Ausführungsformen für ein U-förmiges Profil und für Keile,
- Fig. 22: Schnitte des U-förmigen Profils und von Keilen gemäß Fig. 21,
- Fig. 23: eine Darstellung eines an einer nicht exakt ortsfest ausgerichteten Unterkonstruktion ähnlich der Fig. 9, angehängten und dabei exakt ausgerichteten Glasscheiben-Geländers gemäß Fig. 21,
- Fig. 24: eine perspektivische Längsansicht eines erfindungsgemäßen U-Profils,
- Fig.: 25 einen Schnitt längs der Linie 25-25 der Fig. 24, mit zusätzlich eingespannt gehaltener Glasscheibe,
- Fig. 26: einen Schnitt längs der Linie 26-26 der Fig. 24, mit zusätzlicher, noch nicht in das U-Profil eingesetzter Glasscheibe,
- Fig. 27: eine teilweise Schnittdarstellung des Bodenbereichs eines weiteren erfindungsgemäßen U-förmigen Profils bei seinem Einsetzen in ein U-Profil,
- Fig. 28: das U-förmige Profil nach Fig. 27, vollständig eingesetzt in ein U-Profil gemäß der Erfindung,
- Fig. 29: eine Darstellung ähnlich der von Fig. 26, mit einem andersartigen U-förmigen Profil,
- Fig. 30: eine vergrößerte Detailansicht aus der Fig. 29,
- Fig. 31: eine Darstellung ähnlich der von Fig. 25, mit dem U-förmigen Profil gemäß Fig. 29,30,
- Fig. 32: eine Darstellung ähnlich der von Fig. 27, mit einem andersartigen, 2-teiligen U-förmigen Profil,
- Fig. 33: eine perspektivische Darstellung eines der beiden Teile des 2-teiligen U-förmigen Profils gemäß Fig. 32,
- Fig. 34: eine Darstellung ähnlich der von Fig. 32, mit vollständig eingesetztem U-förmigen Profil,
- Fig. 35: eine Darstellung eines weiteren U-förmigen Profils.

### WEGE ZUM AUSFÜHREN DER ERFINDUNG

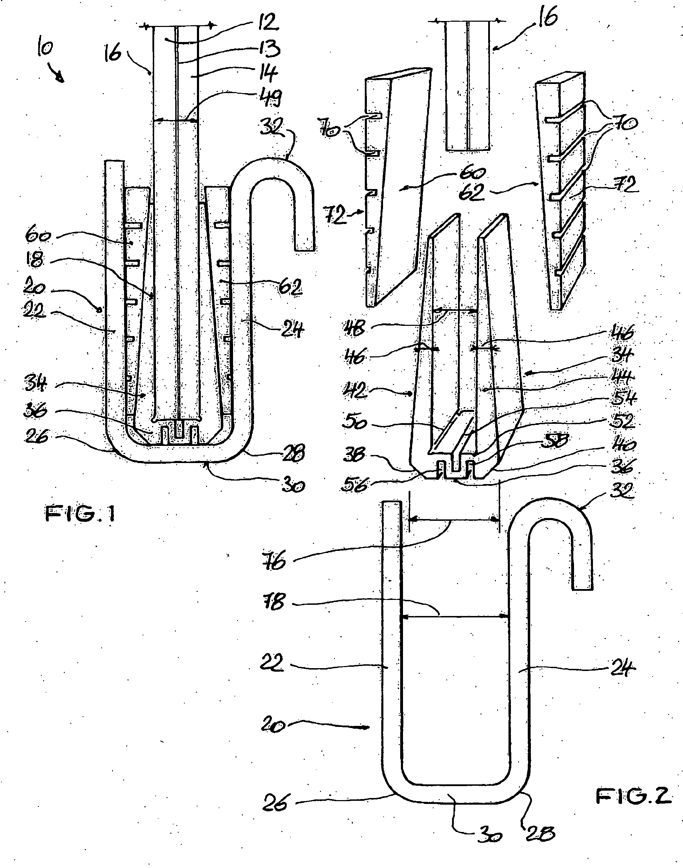

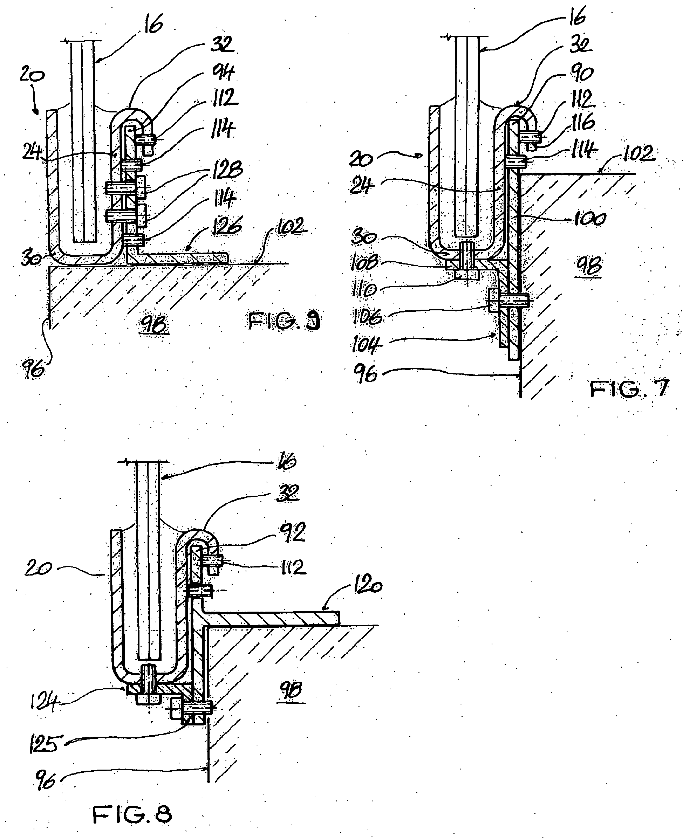

Ein Glasscheiben-Geländer 10 ist mit seinem Fußbereich ausschnittsweise in Fig. 1 dargestellt. Die im vorliegenden Beispielsfall aus zwei über eine Kleberschicht 13 fest miteinander verklebten Scheiben 12, 14 bestehende Glasscheibe 16 sitzt mit ihrem Fußbereich 18 eingespannt gehalten in einem U-Profil 20. Der linke und rechte Schenkel 22, 24 des U-Profils 20 ist ebenflächig und ragt unter Bildung einer jeweiligen Ausrundung 26,28 rechtwinklig von einem den Boden 30 des U-Profils 20 bildenden Steg in der Zeichnung nach oben aus. Am oberen Ende des rechten Schenkels 24 ist eine 180-Grad-Umbiegung 32 vorhandene. Mit dieser Umbiegung 32 kann das U-Profil 20 in ein Befestigungsprofil beispielsweise von oben her eingehängt werden, wie es in den Fig. 7 bis 9 beispielhaft dargestellt ist.

Die beiden Schenkel 22, 24 des U-Profils 20 können unterschiedlich lang sein. So könnte bei einem an der Stirnseite einer Boden- oder Deckenplatte montierten Glasscheiben-Geländer der innere Schenkel 24 aus insbesondere optischen Gründen niedriger als der äußere Schenkel 22 ausgebildet sein.

Die Glasscheibe 16 wird von einem U-förmigen Profil 34 eng anliegend umschlossen. Dieses U-förmige Profil 34 besitzt einen Boden 36 mit einer seitlichen linken und rechten Eckabschrägung 38, 40. Im Bereich dieser Eckabschrägung 38 beziehungsweise 40 ragt eine linke Wand 42 beziehungsweise rechte Wand 44 in etwa rechtwinklig nach oben. Die Wandstärke 46 der beiden Wände 42, 44 nimmt nach oben hin, weg vom Boden 36, kontinuierlich ab. Die lichte Breite 48 zwischen den beiden Wänden 42, 44 ist konstant groß. Die Breite 48 könnte auch nach oben hin leicht abnehmen, so dass dann die beiden Wände 42,44 sich nach oben hin leicht zueinander neigen würden. In jedem Fall ist die maximale lichte Breite 48 zwischen den beiden Wänden 42, 44 im vorliegenden Beispielsfall geringfügig kleiner als die Breite beziehungsweise Dicke 49 der Glasscheibe 16. Dadurch kann durch Auseinanderdrücken der beiden Wände 42,44 des U-förmigen Profils 34 die Glasscheibe 16 mit ihrem Fußbereich 18 in das U-förmige Profil 34 eingesetzt und auf dem Boden 36 aufgesetzt werden. Das leichte voneinander Wegrücken der beiden Wände 42, 44 kann durch eine jeweilige innere Ausrundung 50? 52 im Übergangsbereich der Wand 42, 44 mit dem Boden 36 erleichtert werden. Das geringfügige Vergrößern der lichten Breite 48 des U-förmigen Profils 34 wird durch von innen und außen in den Boden 36 eingeformte Längsschlitze 54 beziehungsweise 56,58 ermöglicht. Die Glasscheibe 16 kann also mit kuppenförmig stramm aufsitzendem U-förmigen Profil 34 in das U-Profil 20 von oben hinein gesetzt werden.

Das U-förmige Profil 34 besteht aus leichtem Kunststoffmaterial, das eine ausreichende Druckfestigkeit besitzt. Das Gewicht der Glasscheibe 16 wird durch das auf sie aufgeschobene U-förmige Profil 34 nur unwesentlich vergrößert.

zum kippsicheren Halten der Glasscheibe 16 in dem U-Profil 20 werden Keile 60, 62 zwischen den linken Schenkel 22 und die linke Wand 42 beziehungsweise zwischen den rechten Schenkel 24 und die rechte Wand 44 eingeschoben. Sofern die Glasscheibe 16 exakt mittig zwischen den beiden Schenkeln 22, 24 des U-Profils 20 platziert ist, sind der linke und rechte Keil 60,62 gleich groß. Bei einer nicht mittigen Anordnung der Glasscheibe 16 in dem U-Profil 20, was etwa bei nicht exakt ausgerichtetem U-Profil 20 der Fall sein kann, sind die beiden Keile 60, 62 nicht querschnittsmäßig gleich. Die beiden Keile 60, 62 oder im Allgemeinen die zum Verkeilen der Glasscheibe 16 verwendeten Keile können vorzugsweise aus einem wesentlich längeren Keil hergestellt werden, als sie in Fig. 2 dargestellt sind. Durch unterschiedliches Abbrechen von Abschnitten eines solchen längeren Keils können dann beliebig dicke Keile hergestellt werden. Zum erleichterten Auseinanderbrechen der Keile besitzen diese Sollbruchstellen, die im vorliegenden Fall als Längsnute 70 auf der zu dem jeweiligen Schenkel 22, 24 des U-Profils 20 zeigenden Außenseite 72 im parallelen Abstand zueinander vorhanden sind.

Die Keile 60 und 62 bestehen im vorliegenden Beispielsfall aus Hart-Kunststoff mit einer Shore Härte von etwa 85. Sie können auch aus metallischem Material bestehen.

Damit die Glasscheibe 16 mit anhängendem U-förmigem Profil 34 leicht in das U-Profil 20 eingesetzt werden kann, ist die maximale Breite 76 des U-förmigen Profils 34 kleiner als die lichte Breite 78 zwischen den beiden Schenkeln 22, 24 des U-förmigen Profils 20.

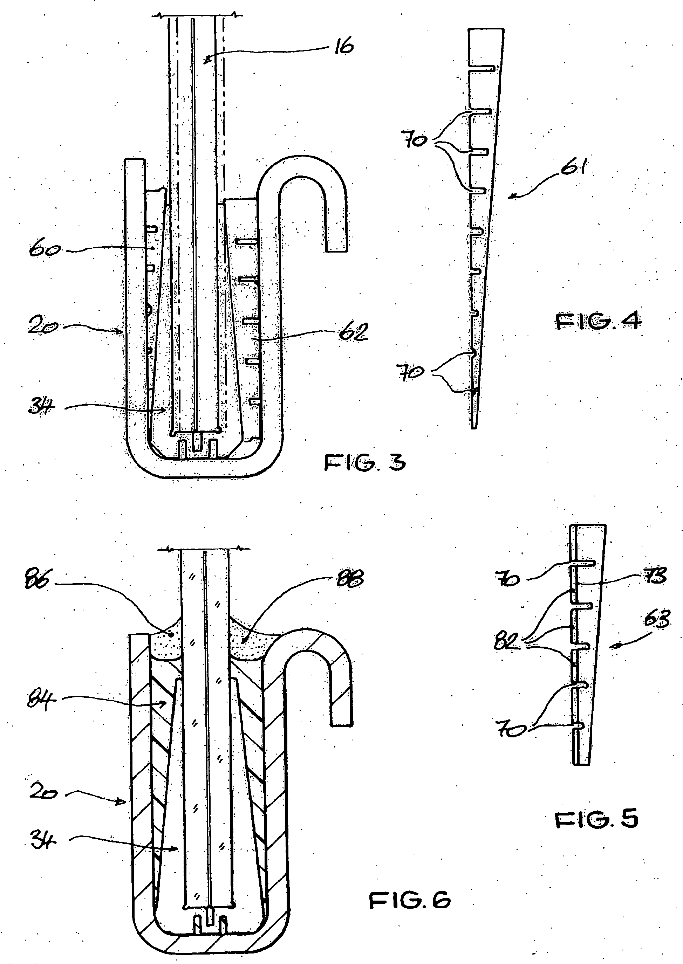

In Fig. 3 ist die vorstehend erwähnte nicht mittige Ausrichtung der Glasscheibe 16 in einem U-Profil 20 dargestellt. Diese außermittige Lage ist durchgezogen gezeichnet, während die mittige Ausrichtung strichpunktiert angedeutet ist. Man erkennt die unterschiedlich dicken Keile 60 beziehungsweise 62 auf den beiden Außenseiten der Glasscheibe 16. Diese beiden Abschnitte 60, 62 können, wie es vorstehend ebenfalls bereits erwähnt ist, aus einem langen Keil 61 (Fig. 4) durch entsprechendes Durchbrechen desselben erzeugt worden sein.

Der in Fig. 5 dargestellte Keil 63 unterscheidet sich von den Keilen 60 bis 62 dahingehend, dass auf seiner Außenseite 73 eine Kunststoffbeschichtung 82 vorhanden ist. Diese Kunststoffbeschichtung ist auf dem im Übrigen aus metallischem Material bestehenden Keil 63 aufgebracht. Die Kunststoffbeschichtung 82 kann die Gleitreibung zwischen dem Keil und dem vorzugweise aus metallischem Material bestehenden U-Profil 20 vergrößern und damit günstig beeinflussen. Andererseits ist zwischen einem aus Kunststoffmaterial bestehenden U-förmigen Profil 34 und einem metallischen Keil 63 ebenfalls eine hohe Gleitreibung vorhanden, die zusammen mit der sehr leicht geneigten Ablagefläche des Keils 63 an dem U-förmigen Profil 34 dafür sorgt, dass die Keile sich nicht selbstständig wieder nach oben aus dem U-Profil 20 herausarbeiten können.

Die Keile 60, 62 brauchen nicht durchgehend in Längsrichtung (senkrecht zur Zeichenebene) des U-Profils 20 angeordnet zu werden. Wo keine Keile vorhanden sind, kann der Hohlraum zwischen dem U-förmigen Profil 34 und dem U-Profil 20 durch eine Vergussmasse 84 ausgefüllt werden (Fig. 6). Diese Vergussmasse 84 kann im flüssigen oder pastösen Zustand in das U-Profil 20 eingebracht werden und dann dort in dem Profil 20 aushärten. Regelmäßig kann es angebracht sein, den Innenraum des U-Profils 20 durch eine obere dauerelastische Masse 86, 88 oder durch ein Abdeckprofil wetterfest und UV-beständig zu verschließen. Mit solchen als linkes und rechtes Kappenprofil ausgebildeten zwei Abdeckprofilen, die in der Zeichnung nicht dargestellt sind, könnte das U-Profil 20 auf den beiden Außenseiten der Glasscheibe 16 kappenförmig abgedeckt werden.

Bei den in Fig. 7 bis 9 dargestellten Befestigungsvariationen für das U-Profil 20 ist das jeweilige U-Profil 20 an einem im vorliegenden Beispielsfall vertikal ausgerichteten Schenkel 90 beziehungsweise 92 oder 94 angeschraubt befestigt. Die obere Umbiegung 32 des U-Profils 20 umschließt von oben das jeweilige Ende dieses Schenkels 90, 92, 94. Es wäre auch möglich, dass das U-Profil mit.seiner Umbiegung sich lastmäßig an dem jeweiligen Schenkel 90, 92,94 anhängt.

Bei der Befestigungskonstruktion gemäß Fig. 7 ist an der Stirnseite 96 eines massiven Bauteils 98 eine Befestigungsplatte 100 befestigt, die die Oberseite 102 dieses massiven Bauteils 98 ein Stück weit nach oben überragt. Im Bereich der Stirnseite 96 ist an der Befestigungsplatte 100 ein L-Profil 104 befestigt. Die dafür erforderliche Befestigungsschraube 106 hält im vorliegenden Beispielsfall auch die Befestigungsplatte 100 an dem massiven Bauteil 98 fest. Der horizontale Schenkel 108 dieses L-Profils 104 ragt horizontal von dem massiven Bauteil 98 aus und trägt das von oben auf ihm aufruhende U-Profil 20. Zum Befestigen des U-Profils 20 an dem horizontalen Schenkel 108 dient eine durch den horizontalen Schenkel 108 des L-Profils 104 und den Boden 30 des U-Profils 20 hindurch gehende Befestigungschraube 110.

Zum Ausrichten des U-Profils 20 dienen zwei Abdrück-Gewindestifte 112, 114, die einmal durch die Umbiegung 32 (Gewindedurchbohrung 116) gegen die Befestigungsplatte 100 beziehungsweise durch die Befestigungsplatte 100 hindurch gegen den rechten Schenkel 24 des U-Profils 20 einwirken können und dadurch das U-Profil 20 in seiner gekippten Ausrichtung relativ zur Befestigungsplatte 100 lagefixieren können. Es könnte auch nur einer der Stifte 112, 114 verwendet werden. Die höhenmäßige Ausrichtung des U-Profils 20 kann durch Unterlegscheiben zwischen dem horizontalen Schenkel 108 und dem Boden 30 oder durch Unterfüttern der Umbiegung 32 erfolgen. Es wäre auch möglich, die Befestigungsschraube 110 nicht durch den Boden 30 vollständig hindurch sondern in eine im Boden 30 vorhandene nach unten offene Säcklochöffnung eintauchen zu lassen. Das U-Profil 20 kann grundsätzlich beliebig hoch aus der Stirnseite 96 und dann beispielsweise auch bündig zur Oberseite 102 angeordnet werden.

Die in Fig. 8 dargestellte Befestigungskonstruktion unterscheidet sich von der in Fig. 7 im Wesentlichen darin, dass statt der Befestigungsplatte 100 ein T-förmiges Befestigungsprofil 120 an dem massiven Bauteil 98 fest angebracht ist. Das gegenüber dem L-Profil 104 in Fig. 8 verwendete L-Profil 124 besitzt einen gegenüber dem L-Profil 104 verkürzten vertikalen Schenkel 125, mit dem es an dem massiven Bauteil 98 festgeschraubt ist, so wie dies grundsätzlich auch mit dem L-Profil 104 der Fall ist.

Bei der in Fig. 9 dargestellten Befestigungskonstruktion ist im Abstand zur vorderen Stirnseite 96 eines massiven Bauteils 98 auf dessen Oberseite 102 ein Befestigungswinkel 126 fest angebracht. Ein U-Profil 20 ist im vorliegenden Beispielsfall mittels zweier Befestigungsschrauben 128, die durch den im vorliegenden Beispielsfall vertikalen Schenkel 94 dieses Befestigungswinkels 126 von außen hindurch greifen und in den rechten Schenkel 24 des U-Profils 20 hinein greifen beziehungsweise im vorliegenden Beispielsfall durch diesen rechten Schenkel 24 hindurch greifen, an diesem vertikalen Schenkel 94 befestigt. Die dafür vorgesehenen Schraublöcher im vertikalen Schenkel 94 könnten auch Langlöcher sein. Dann könnte das U-Profil 20 mit seinem Boden 30 auf der Oberseite 102 des massiven Bauteils 98 aufruhen. Die Befestigungsschrauben 128 würden dann nur für eine horizontale Ausrichtung des U-Profils 20 an dem Befestigungswinkel 126 sorgen. Schließlich sind im vorliegenden Beispielsfall noch mehrere Abdrück-Gewindestifte 112, 114 vorhanden, mit denen - in ähnlicher Weise wie es in der Fig. 7 der Fall ist das U-Profil 20 an dem vertikalen Schenkel 94 ausgerichtet werden kann. In geeigneten Fällen könnte ein Ausrichten des U-Profils 20 auch nur mit einem der Stifte 112,114 durchgeführt werden. Das U-Profil 20 kann durch entsprechendes Anordnen des Befestigungswinkels 126 auch die Stirnseite 96 überragen.

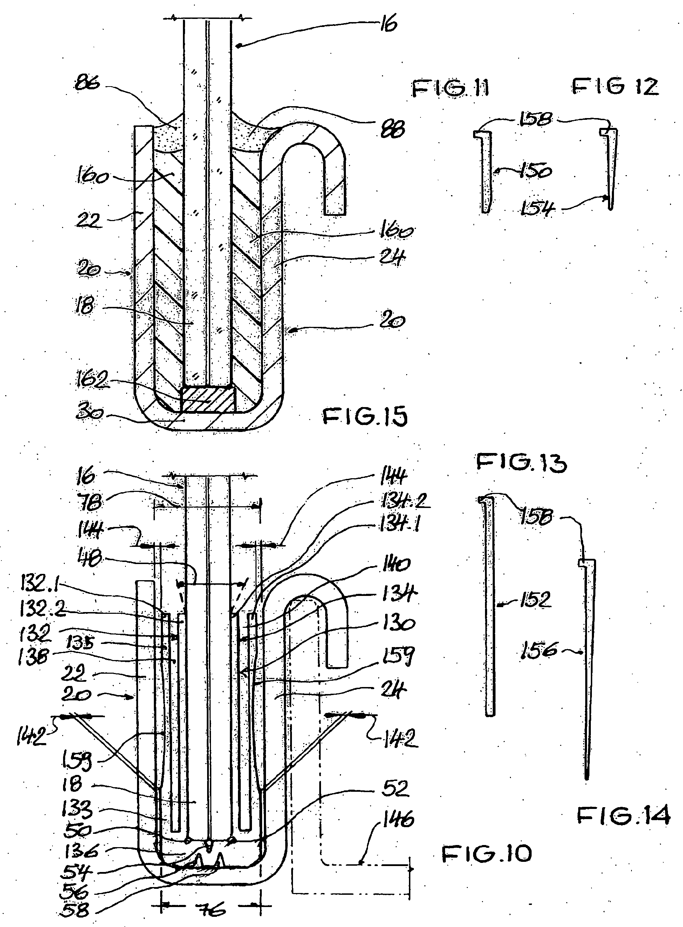

Bei der in Fig. 10 dargestellten Ausführungsvariante der Erfindung ist im Unterschied zu den vorstehenden Ausführungsformen ein denen gegenüber andersartiges U-förmiges Profil 130 vorhanden. Bei diesem U-förmigen Profil 130 besitzen seine beiden seitlichen Wände 132,134 einen bis an den Boden 136 dieses Profils 130 von oben nach unten durchgehenden Schlitz 138,140. Die linke Wand 132 besitzt dadurch zwei Wandteile 132.1 und 132.2, die durch den Schlitz 138 voneinander beabstandet sind. Vergleichbare zwei Wandteile 134.1 und 134.2 sind auch bei der spiegelbildlich anderen Wand 134 vorhanden. Zusammen mit dem U-förmigen Profil 130, das in gleicher Weise wie das U-förmige Profil 34 den Fußbereich 18 der Glasscheibe 16 umschließt, ist die Glasscheibe 16 in das U-Profil 20 von oben eingesetzt. Sofern die Glasscheibe 16 mittig in dem U-Profil 20 platziert ist, ist zwischen dem unteren Bereich 133 des Wandteils 132.1 und dem linken Schenkel 22 des U-Profils 20 ein lichter Abstand 142 vorhanden. Dieser lichte Abstand 142 ist im vorliegenden Fall kleiner als ein vergleichbarer Abstand 144 zwischen dem oberen Bereich 135 dieses Wandteils 132.1 und dem linken Schenkel 22. Auf diese Weise wird sichergestellt, dass sich das U-förmige Profil 130 problemlos vollständig in das U-Profil 20 von oben hineinsetzen lässt. Dazu ist ebenfalls die maximale Breite 76 dieses U-förmigen Profils 130 kleiner als die maximale lichte Breite 78 des U-Profils 20. Der gegenseitige lichte Abstand zwischen den beiden Wandteilen 132.2 und 134.2 entspricht der lichten Breite 48 des U-förmigen Profils 34.

In dem Boden 136 des U-förmigen Profils 130 sind wie beim U-förmigen Profil. 34 oben und unten Längsschlitze 54,56,58 und innere Ausrundungen 50,52 vorhanden.

Bei der vorstehend erwähnten mittigen Ausrichtung der Glasscheibe 16 in dem Profil 20 sind zwischen dem Wandteil 134.1 der rechten Wand 134 vergleichbare lichte Abstände 142 im unteren Bereich dieses Wandteils beziehungsweise 144 im oberen Abschnitt dieses Wandteils 134.1 zum rechten Schenkel 24 des U-Profils 20 vorhanden. Dieses U-Profil 20 ist an einem Befestigungswinkel 146 angehängt gelagert, der etwa dem Befestigungswinkel 126 (Fig. 9) entsprechen könnte.

In den rechten und linken Schlitz 138,140 können von oben kurze oder lange Stifte 150,152 beziehungsweise kurze oder lange Keile 154,156 eingesetzt werden (Fig. 11 bis 14). Die Stifte und Keile besitzen oben beispielsweise rechtwinklig angeformte Nasen 158. Die Nasen verhindern, dass die Stifte oder Keile vollständig versenkt in die Schlitze 138, 140 von oben hinein geschoben werden können. Durch die angeformten Nasen 158 können die Stifte beziehungsweise Keile wieder leicht nach oben aus den Schlitzen 138,140 herausgezogen werden. Letzteres ist hilfreich, um die Scheibe 16 beispielsweise aus dem U-Profil 20 nach oben wieder herausheben zu können. Dies könnte im Falle eines Scheibenbruches erforderlich werden.

Durch die Keile und gegebenenfalls Schlitze kann das linke Wandteil 132.1 in seinem unteren Bereich 133 und in seinem oberen Bereich 135 an der Innenseite des linken Schenkels 22 pressend angelegt werden. Dadurch entsteht eine obere und untere Zwei-Punkt-Lagerung der linken Wand 132 an diesem linken Schenkel 22. Die Zwei-Punkt-Lagerung wird durch eine konkave Einwölbung 159, die auch in dem rechten Wandteil 134.1 in vergleichbarer Weise vorhanden ist, sichergestellt.

In einen Schlitz 138,140 können auch mehrere der Stifte und Keile 150, 152, 154, 156 in Kombination zusammen eingefügt werden. Die Art und die Anzahl der Stifte beziehungsweise der Keile richtet sich nach den jeweils vorhandenen Abständen 142,144 und der Breite der Schlitze 138, 140. Mit den Stiften und Keilen kann nicht nur die seitliche sondern auch eine planmäßig gekippte oder nicht gekippte Ausrichtung der Scheibe 16 in dem Profil 20 ermöglicht werden.

In Fig. 15 ist eine Ausführungsvariante der Erfindung dargestellt, bei der auf U-förmige Profile 34, 130 und auch Keile 60, 61, 62, 63 verzichtet werden kann. Der Hohlraum zwischen der Glasscheibe 16 und den linken und rechten Schenkeln 22, 24 sowie dem Boden 30 des jeweiligen U-Profils 20 wird durch eine Vergussmasse 160 ausgefüllt. Diese Vergussmasse 160 kann in flüssigem oder pastösen oder einem anderen geeigneten Zustand in das Innere des U-Profils 20 eingefüllt werden. Regelmäßig wird diese Scheibe 16 vorher mit ihrem Fußteil 18 in dieser Vergussmasse 160 platziert und dabei über eine punktuelle oder durchgehende Verklotzung 162 auf dem Boden 30 des U-Profils 20 aufgelagert. Es wäre auch möglich, die Glasscheibe 16 in die vorhandene Vergussmasse 160 hinein zu setzen. Nach Aushärten der Vergussmasse 160 ist dann die Glasscheibe 16 fest lagefixiert im Inneren des U-Profils 20 gehalten. Das U-Profil 20 kann dann, wie vorstehend beispielhaft dargestellt, in ortsfest vorhandene Konstruktionsteile eingehängt oder sonstwie befestigt werden. Auch bei dieser Ausführungsvariante kann es sinnvoll sein, was vom Material der Vergussmasse 160 abhängt, diese Vergussmasse 160 von oben durch eine dauerelastische Masse 86, 88 und alternativ oder zusätzlich durch Abdeckprofile schützend abzudecken.

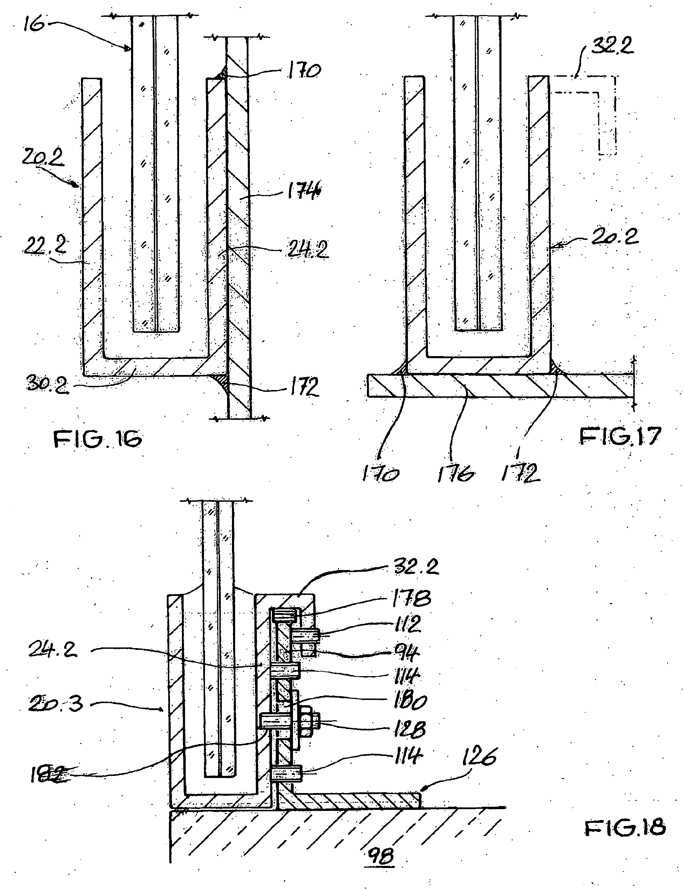

Das in Fig. 16 dargestellte U-Profil 20.2 besitzt einen linken und rechten Schenkel 22.2, 24.2 und einen Boden 30.2. Zwischen den beiden Schenkeln 22.2, 24.2 und dem Boden 30.2 ist keine Ausrundung 26 beziehungsweise 28 vorhanden, so wie es bei dem U-Profil 20 der Fall ist. Das U-Profil 20.2 ist kantig ausgebildet. Im Unterschied zu dem vorstehend beschriebenen U-Profil 20 ist an dem rechten Schenkel 24.2 des U-Profils 20.2 auch keine 180-Grad-Umbiegung vorhanden. Auch das U-Profil 20 könnte ohne eine solche 180-Grad-Umbiegung 32 ausgebildet sein.

Das U-Profil 20.2, in dem eine Glasscheibe 16 in gleicher Weise wie in dem U-Profil 20 eingespannt gehalten werden kann, ist mit seinem rechten Schenkel 24.2 über eine obere und untere Schweißnaht 170,172 an einer als Platte 174 ausgebildeten ortsfesten Befestigungskonstruktion angeschweißt. Eine Befestigungskonstruktion mittels Schweißverbindungen könnte auch bei dem vorstehenden U-Profil 20 vorgenommen werden.

Das in Fig. 17 dargestellte U-Profil 20.2 ist über zwei Schweißnähte 170, 172 auf einer ortsfest vorhandenen Bodenplatte 176 festgeschweißt. Das U-Profil 20.2 kann also hängend oder stehend auf einer ortsfesten Befestigungskonstruktion angeordnet werden. Darüber hinaus kann das U-Profil 20.2 auch mit einer 180-Grad-Umbiegung am oberen Rand seines beispielsweise rechten Schenkels 24.2. ausgestattet sein, die in Fig. 17 als nicht ausgerundete, kantige 180-Grad-Umbiegung 32.2 strichpunktiert angedeutet ist. Über eine solche Umbiegung 32.2 könnte das U-Pröfil 20.2 auch auf einer ortsfesten Befestigungskonstruktion angehängt werden.

In Fig. 18 ist eine solche aufgehängte Konstruktion dargestellt. Das dort gezeigte U-Profil 20.3 entspricht dem U-Profil 20.2 mit dem Unterschied, dass es mit einer kantigen 180-Grad-Umbiegung 32.2 ausgestattet ist. Dieses U-Profil 20.3 stützt sich mit seiner 180-Grad-Umbiegung 32.2 über mehrere Unterlegscheiben 178 von oben auf dem senkrechte Schenkel 94 eines an einem massiven Bauteil 98 befestigten Befestigungswinkels 126 auf. In dem Schenkel 94 ist ein Langloch 180, das von einer Befestigungsschraube 128 von außen her durchdrungen wird. Die Befestigungsschraube 128 greift in ein in dem rechten Schenkel 24.2 vorhandenes Sackloch 182 ein. Mittels mehrerer Abdrückstifte 112, 114 kann der rechte Schenkel 24.2 und damit das gesamte U-Profil 20.3 relativ zum Befestigungswinkel 126 ausgerichtet werden. Gegebenenfalls könnte auf einen der beiden Abdrück-Gewindestifte 114 auch verzichtet werden.

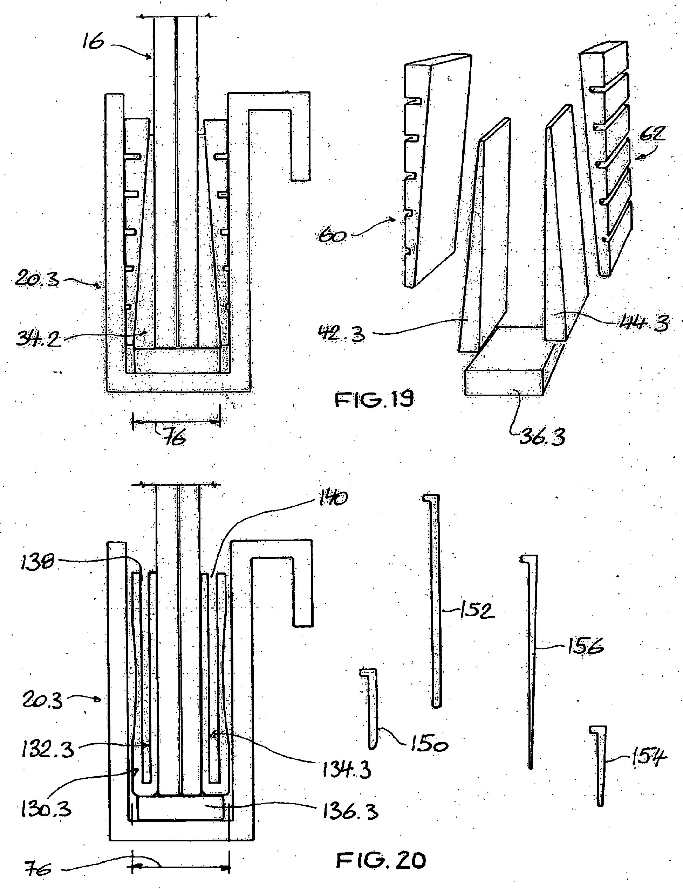

In Fig. 19 ist das U-Profil 20.3 mit eingespannt in ihm einsitzender Glasscheibe 16 dargestellt. Außerdem sind noch einmal zusätzlich die dabei verwendeten Klemmeinrichtungen einzeln dargestellt..Das U-förmige Profil 34.2 unterscheidet sich von dem U-förmigen Profil 34 im Wesentlichen dahingehend, dass es nicht einteilig sondern mehrteilig, aus drei Profilkörpern besteht. Diese drei Profilkörper bildern den Boden 36.3 und die linke und rechte Wand 42.3,44.3 des U-förmigen Profils 34.2. Die drei Profilkörper entsprechen formmäßig den entsprechenden Teilen des U-förmigen Profils 34 mit dem Unterschied, dass im vorliegenden Fall der Boden 36.3 keine linke und rechte Eckabschrägung 38, 40 und auch keine oberen beziehungsweise unteren Längsschlitze 54, 56, 58 aufweisen. Auch die inneren Ausrundungen 50, 52 des U-förmigen Profils 34 sind bei diesem U-förmigen Profil 34.2 aufgrund der mehrteiligen Ausbildung desselben nicht erforderlich und damit auch nicht vorhanden. Zum Verkeilen des U-förmigen Profils 34.2 in dem U-Profil 20.3 sind wiederum Keile 60,62 wie bei der Ausbildung gemäß Fig. 2, vorhanden.

Bei der in Fig. 20 dargestellten Ausführungsform der Erfindung ist in dem U-Profil 20.3 ein U-förmiges Profil 130.3 vorhanden, das dem U-förmigen Profil 130 (Fig. 10) entspricht mit dem Unterschied, dass es wieder aus drei Profilkörpern zusammengesetzt ist, so wie es in vergleichbarer Weise auch bei dem in Fig. 19 dargestellten U-förmigen Profil 34.2 der Fall ist. So stehen die linke Wand 132.3 und die rechte Wand 134.3 lose und senkrecht auf dem einen rechteckigen Querschnitt besitzenden Boden 136.3 auf. Über kurze oder längere Stifte 150, 152 oder kürzere oder längere Keile 154,156 können die beiden jeweiligen Wandteile der beiden Wände 132.3,134.3 auseinander gedrückt und von innen gegen die beiden Schenkel des U-Profils 20.3 pressend gedrückt werden und dadurch die Scheibe 16 eingespannt in dem U-Profil 20.3 gehalten werden, so wie das in Zusammenhang mit der Fig. 10 vorstehend beschrieben ist. Das U-Profil 20.3 kann dann wiederum, so wie in Fig.10 beispielhaft dargestellt, an einer Unterkonstruktion wie beispielsweise an einem Befestigungswinkel 146 angehängt oder an demselben angeschweißt oder angeschraubt befestigt werden.

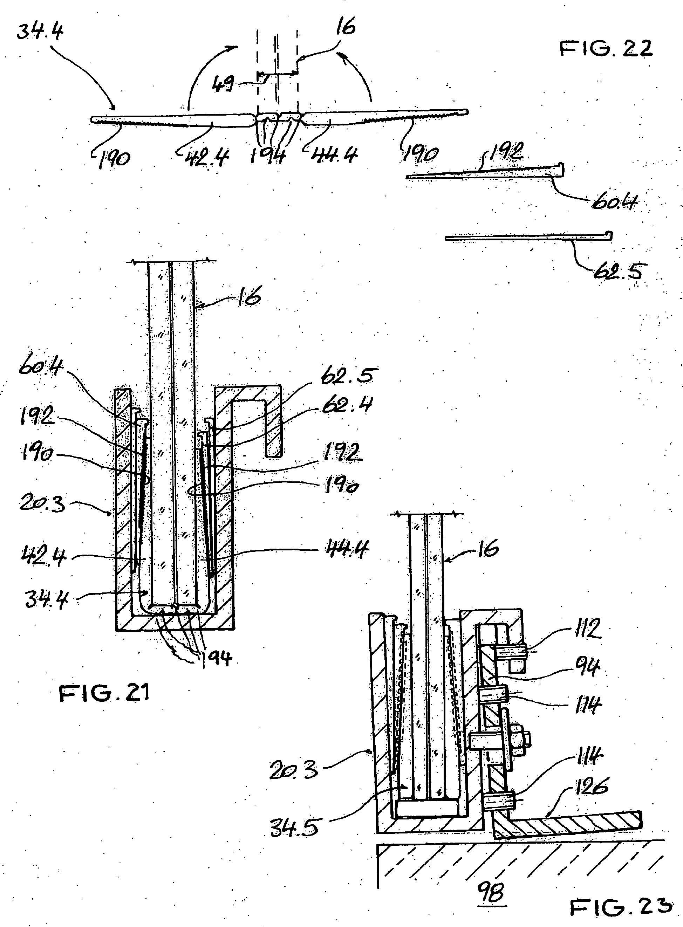

Bei dem in Fig. 21 dargestellten kantigen U-Profil 20.3 ist ein dem U-förmigen Profil 34 vergleichbares U-förmiges Profil 34.4 vorhanden, das sich vom U-förmigen Profil 34 dahin gehend unterscheidet, dass im oberen Bereich seiner linken und rechten Wand 42.4, 44.4 eine strukturierte, rauhe Oberfläche 190 vorhanden ist. Im vorliegenden Beispielsfall ist diese Oberfläche 190 gezackt ausgebildet. Sie könnte auch beispielsweise leicht gewellt ausgebildet sein.

Eine vergleichbare strukturierte, rauhe Oberfläche 192 ist auch an der Außenseite von einem rechten und linken Keil 60.4, 62.4 so vorhanden, so dass zwei rauhe Oberflächen 190,192 aneinander liegen und für eine gegenseitige große Reibung sorgen können. Im vorliegenden Beispielsfall ist zwischen dem rechten Keil 62.4 und dem U-Profil 20.3 noch ein weiterer Keil 62.5 vorhanden, der beispielsweise dem Keil 154 oder 156 (Fig. 20) entsprechen könnte. Mit verschieden langen und verschieden ausgebildeten Keilen kann dann eine Glasscheibe 16 in einem U-Profil 20.3 nicht nur in seitlicher, sondern auch in vertikaler Ausrichtung exakt ausgerichtet in einem entsprechenden Profil 20, 20.3 eingespannt gehalten werden.

In Fig. 22 ist das U-förmige Profil 34.4 in einem in Querrichtung als langgestrecktes Stranggussprofil hergestellten Zustand dargestellt. In diesem Zustand kann eine Glasscheibe 16 auf sein Mittelteil (Boden) gestellt werden und seine beiden Außenseiten (Wände 42,4,44.4) nach oben um ca. 90 Grad gegen die beiden Außenseiten der Glasscheibe 16 geschwenkt werden. Die in Fig. 22 ersichtliche (horizontale) Länge des Mittelteils ist geringfügig kürzer als die Dicke 49 der Glasscheibe 16. Die im Mittelteil (Boden) vorhandenen oberen und unteren Längsnute 194 ermöglichen ein Ausdehnen des Mittelteils und damit einen strammen Sitz des U-förmigen Profils 34.4 um den Fußbereich der Glasscheibe 16 herum.

In Fig. 23 ist eine zur Fig. 18 vergleichbare Konstellation dargestellt. Bei dieser Ausbildung ist der Befestigungswinkel 126 nicht rechtwinklig sondern schief auf dem massiven Bauteil 98 ortsfest vorhanden. Mittels der Gewindestifte 112 und des einen oder der beiden durch den vertikalen Schenkel 94 des Befestigungswinkels 126 hindurchgreifenden weiteren Befestigungsstifte i 14 kann das U-Profil 20.3 exakt senkrecht ausgerichtet werden. Sollte die Ausrichtung des U-Profils 20.3 nicht exakt vorhanden sein, könnte durch entsprechende Anordnung von Keilen dafür gesorgt werden, dass die Scheibe 16 in ihrer exakten vertikalen Ausrichtung vorhanden ist. Die Scheibe 16 könnte auch mit einer planmäßigen Schiefstellung, sollte eine solche gewünscht sein, in dem U-Profil eingespannt gehalten werden.

In dem U-Pröfil 20.3 ist ein U-förmiges Profil 34.5 vorhanden, das dem U-förmigen Profil 34.4 (Fig. 21) entspricht mit dem Unterschied, dass es wieder aus drei Profilkörpern zusammengesetzt ist, so wie das in vergleichbarer Weise auch bei dem in Fig. 20 dargestellten Profil 130.3 der Fall ist.

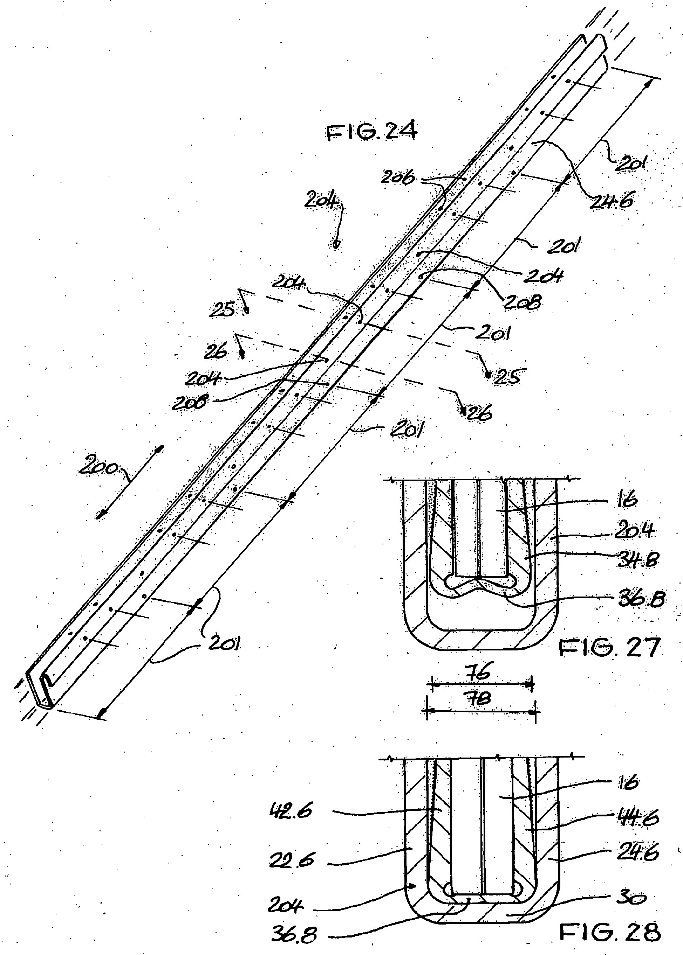

In Fig. 24 ist ein U-Profil 20.4 in einer perspektivischen Längsansicht mit seinen in Längsrichtung 200 vorgesehenen verschiedenen Bohrungslöchern dargestellt.

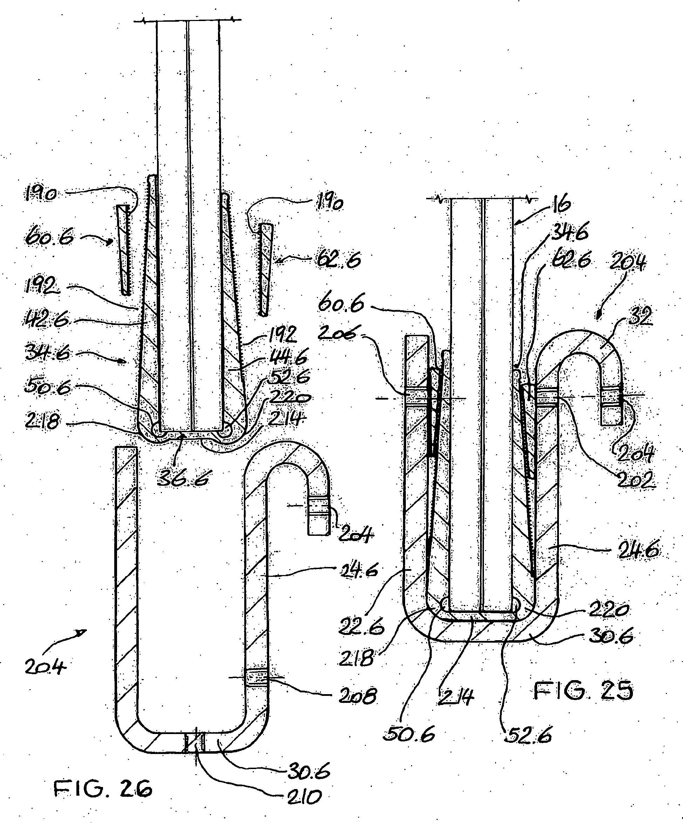

Diese Bohrungen, die in Fig. 25 und 26 im Einzelnen näher dargestellt sind, sind jeweils in gleichen aufeinanderfolgenden Abschnitten 201 des U-Profils 20.4 vorhanden. Die Länge eines Abschnitts 201 beträgt im vorliegenden Fall etwa 400 Millimeter. Das U-Profil 20.4 hat damit eine Gesamtlänge von dementsprechend beispielsweise 2400 Millimetern. Dies gilt in vergleichbarer Weise auch für die vorstehend beschriebenenen Ausführungsformen der verschiedenen U-Profile.

Im Querschnitt 25, der, wie vorstehend bereits ausgeführt, etwa alle 400 Millimeter in Längsrichtung 200 in dem U-Profil 20.4 sich wiederholt, ist in dem rechten Schenkel 24.6 des U-Profils 20.4 eine obere Bohrung 202 vorhanden. Diese Bohrung 202 fluchtet mit einer Bohrung 204, die in der oberen Umbiegung 32 des rechten Schenkels 24.6 dieses U-Profils 20.4 entsprechend vorgesehen ist. Durch diese beiden Bohrungen 202, 204 hindurch kann ein im Inneren des U-Profils 20.4 an dieser Stelle vorhandener Keil, wie im vorliegenden Beispielsfall ein Keil 62.6 gegen ein den Fußbereich einer Glasscheibe 16 kappenmäßig von unten einhüllendes U-förmiges Profil 34.6 gedrückt werden. Dabei wird auf reibschlüssige beziehungsweise formschlüssige Weise verhindert, dass der Keil 62.6 ungewollt nach oben aus dem U-Profil 20.4 heraus fallen kann. Zusätzlich ist - im vorliegenden Beispielsfall in Höhe dieser beiden Bohrungen 202, 204 - in dem linken Schenkel 22.6 dieses U-Profils eine weitere Bohrung 206 vorgesehen. Durch diese Bohrung 206 hindurch könnte mittels eines entsprechenden Schraubgliedes auch der im vorliegenden. Fall auf der linken Seite der Glasscheibe 16 vorgesehene linke Keil 60,6 reibschlüssig beziehungsweise formschlüssig in seiner eingesteckten Position lagemäßig fixiert gehalten werden und dadurch verhindert werden, dass dieser Keil 60.6 sich aus dem U-Profil 20.4 nach oben heraus selbstständig heraus arbeiten könnte. Auf alle diese Bohrungen 202, 204, 206 könnte auch verzichtet werden, da die durch diese Bohrung hindurch mögliche lagemäßige Fixierung der Keile 60.6. 62.6 durch deren strukturierte Oberfläche verwirklicht wird.

In Längsrichtung 200 versetzt zu den vorstehend beschriebenen Bohrungen 202, 204, 206 ist, wie Fig. 26 verdeutlicht, in der oberen Umbiegung 32 des rechten Schenkels 24.6 ebenfalls eine Bohrung 204 vorhanden. Diese Bohrung 204 entspricht der Gewindedurchbohrung 116, wie sie in Fig. 7 dargestellt ist. Durch diese Bohrung 204 hindurch kann mittels eines Gewindestiftes 112 (Fig. 7) das U-Profil 20.4 an einer Befestigungskonstruktion in vertikaler Hinsicht ausgerichtet werden, so wie es in Zusammenhang mit den Fig. 7 bis 9 vorstehend bereits ausgeführt ist.

Im unteren Bereich des rechten Schenkels 24.6 ist eine weitere Bohrung 208 vorhanden. In diese Bohrung, die eine Durchbohrung oder eine Sacklochbohrung sein kann, kann das U-Profil 20.4 an einer Befestigungskonstruktion festgeschraubt werden, wie das ebenfalls im Vorstehenden bereits beschrieben ist. Eine Befestigung des U-Profils kann auch durch eine in seinem Boden 30.6 mittig vorgesehene Bohrung 210 vorgenommen werden. Diese Bohrung kann ebenfalls eine Durchbohrung oder eine Sacklochbohrung sein. Bis auf die verschiedenen Bohrungen entspricht das U-Profil 20.4 dem vorstehend beschriebenen U-Profil 20.

In das U-Profil 20.4 - Vergleichbares gilt für alle vorstehend beschriebenen U-Profile - kann die Glasscheibe 16 zusammen mit einem sie von unten kappenförmig umgebenden U-förmigen Profil 34.6 eingesetzt werden.

Dieses U-förmige Profil 34.6 entspricht im Wesentlichen dem vorstehenden U-förmigen Profil 34.4 (Fig. 21). So besitzen seine linke und rechte Wand 42.6 beziehungsweise 44.6 ebenfalls eine strukturierte, im vorliegenden Beispielsfall gezackte Oberfläche 192. Eine vergleichbare Oberfläche 190 besitzen auch ein linke und ein rechter Keil 60.6,62.6. Diese beiden Keile entsprechen den beiden Keilen 60.4, 62.4 der Fig. 21 mit dem Unterschied, dass bei ihnen an ihrem oberen Ende keine Nasen (Fig. 11, Fig. 12) vorhanden sind. Dadurch können die Keile 60.6, 62,6 wünschenswert weit nach unten an der entsprechenden linken beziehungsweise rechten Wand 42.6, 44.6 positioniert werden.

Der Boden 36.6 des U-förmigen Profils 34.6 besitzt auf seiner Unterseite 214 einen beidseitig über eine innere Ausrundung 50.6, 52.6 an die beiden Wände 42.6, 44.6 angeschlossenen Rücksprung, so dass die Unterseite 214 als ein Nutgrund wirkt. In Fig. 26 ist dieser Rücksprung in dem Boden 36.6 vorhanden. Sobald die Glasscheibe 16 mit dem U-förmigen Profil 34.6 von oben in das U-Profil 20.4 vollständig eingesetzt und gegen den Boden 30.6 des U-Profils 20.4 drückend angelegt Wird, wird durch die Glasscheibe 16 der Bonden 36.6 nach unten gegen den Boden 30.6 des U-Profils 20.4 gedrückt. Dadurch drücken sich die unteren Enden der linken und rechten Wand 42.6, 44.6 des U-förmigen Profils 34.6 im Bereich der jeweiligen linken und rechten Ausrundung 218, 220 nach außen. Dies hat zur Folge, dass sich das U-förmige Profil 34.6 im Bodenbereich von innen her pressend an die Innenseite des linken beziehungsweise rechten Schenkels 22.6, 24.6 anlegt (Fig. 25). Auf diese Weise kann sich das U-förmige Profil 34.6 nicht ungewollt nach oben in dem U-Profil 20.4 verschieben.

Im vorliegenden Beispielsfalls gemäß Fig. 24 sind innerhalb eines Längenabschnitts 201 in Längsrichtung 200 zweimal die in Fig. 26 vorhandenen Bohrungen in dem U-Profil 20.4 vorgesehen.

Das in Fig. 27 mit seinem unteren Bereich dargestellte U-förmige Profil 34.8 unterscheidet sich von dem entsprechenden Profil 34.6 der Fig. 25 und 26 durch seinen Boden 36.8. Der Boden 36.8 weist bei dem in Fig. 27 dargestellten Zustand, wo das U-förmige Profil 34.8 noch nicht vollständig in ein U-Profil, wie beispielsweise in ein U-Profil 20.4 eingesetzt ist, eine in das Innere des U-förmigen Profils einspringende Form auf, die von der im U-förmigen Profil 34.8 eingesetzten Glasscheibe 16 noch nicht heruntergedrückt ist. Der Boden 36.8 besitzt im vorliegenden Beispielsfall eine satteldachförmige Form. Die maximale Breite 76 dieses U-förmigen Profils 34.8 ist geringfügig kleiner als die lichte Breite 78 des U-Profils 20.4, in das dieses U-förmige Profil 34.8 zusammen mit einer Glasscheibe 16 eingesetzt werden soll. Der eingesetzte Zustand dieses U-förmigen Profils 34.8 ist in Fig. 28 dargestellt.

Beim Einsetzen des U-förmigen Profils 34.8 in das U-Profil 20.4 sitzt die Glasscheibe 16 zwischen den beiden Wänden 42.6,44.6 des U-förmigen Profils 34.8 (Fig. 27). Beim vollständigen Einsitzen des U-förmigen Profils 34.8 in dem U-Profil 20.4 wird die Glasscheibe 16 vollständig nach unten in das U-förmige Profil 34.8 hineingeschoben. Dabei wird der satteldachförmige Boden 36.8 nach unten gegen den Boden 30 des U-förmigen Profils 20.4 gedrückt. Dadurch wird das U-förmige Profil 34.8 in seinem Bodenbereich breiter, so dass es sich von innen reibschlüssig an der Innenseite der beiden Wände 22.6, 24.6 des U-Profils 20.4 anlegt. Aufgrund der keilförmigen, sich nach oben verjüngenden beiden Wände 42.6, 44.6 des U-förmigen Profils 34.8 ist zwischen der jeweiligen Wand und der linken beziehungsweise rechten Wand 22.6, 24.6 des U-Profils 20.4 ein sich nach oben vergrößernder Spalt vorhanden, der mit beispielsweise Keilen 60.6, 62.6 (Fig. 25) ausgefüllt werden kann, so wie das im Vorstehenden bei den verschiedenen Ausführungsformen des Glasscheiben-Geländers ausgeführt ist.

Im nicht vollständig eingesetzten Zustand des U-förmigen Profils 34.8 in ein U-Profil wird durch die satteldachförmige Ausbildung des Bodens 36.8 in demselben eine V-förmige, mittige Längsnut ausgebildet.

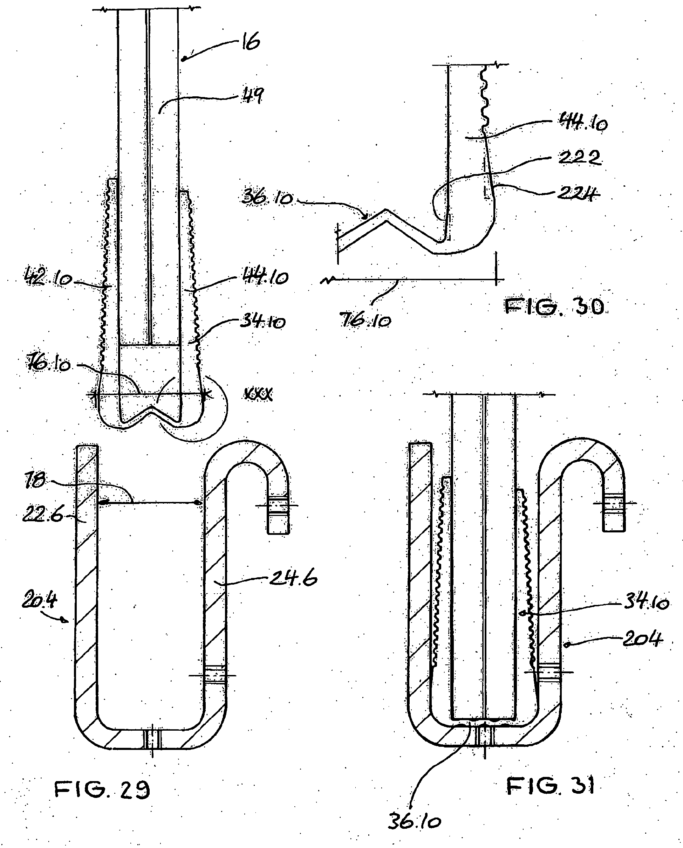

In den Fig. 29, 30 und 31 ist ein U-Profil 20.4 dargestellt - Vergleichbares gilt für alle vorstehend beschriebenen U-Profile -, in das ein U-förmiges Profil 34.10 zusammen mit einer Glasscheibe 16 von oben her eingesetzt werden kann. Im vorliegenden Beispielsfall wird erst das U-förmige Profil 34.10 in das U-Profil 20.4 eingesetzt und anschließend die Glasscheibe 16 von oben in das U-förmige Profil 34.10 eingeschoben. Bei diesem Einscheiben legt sich der untere Bereich des U-förmigen Profils 34.10 seitlich fest an die beiden Schenkel 22.6,24.6 des U-Profils 20.4 an.

Das U-förmige Profil 34.10 entspricht im Wesentlichen dem U-förmigen Profil 34.8 (Fig. 27,28). Seine maximale Breite 76.10, die im Bodenbereich dieses Profils im nicht in ein U-Profil eingeschobenen Zustand vorhanden ist, ist geringfügig kleiner als die lichte Breite 78 des U-Profils 20.4. Auf diese Weise kann das U-Profil in seiner in Fig. 30 gezeigten Stellung ohne in ihm einsitzender Glasscheibe 16 oder mit lediglich teilweise einsitzender Glasscheibe 16, wie in Fig. 29 dargestellt ist, in das U-Profil 20.4 von oben eingesetzt werden. Beim vollständigen Einschieben der Glasscheibe 16 in das U-förmige Profil 34.10 wird dasselbe in seinem Bodenbereich auseinander gedrückt, ähnlich wie das Vorstehend im Zusammenhang mit dem Profil 34.8 beispielsweise beschrieben ist.

Beim U-förmigen Profil 34.10 erfolgt das Auseinanderdrücken des in dem U-Profil 20.4 einsitzenden U-förmigen Profils 34.10 dadurch, dass die Glasscheibe 16 den satteldachförmig nach innen einspringenden Boden 36.10 nach unten und dadurch die beiden Wände 42.10, 44.10 voneinander wegdrückt und damit von innen an die beiden Schenkel 22.6 und 24.6 des U-Profils 20.4 anpresst. Zusätzlich wird dieses Auseinanderdrücken unterstützt durch eine keilartige Verbreiterung 222, die im Bodenbereich der linken und rechten Wand 42.10, 44.10. vorhanden ist. Diese keilartige Verbreiterung 222 der beiden Wände 42.10,44.10 verringert den gegenseitigen Abstand dieser beiden Wände auf ein Maß, das kleiner ist als die Dicke 49 der Glasscheibe 16. Die Glasscheibe 16 drückt also dann, wenn sie in den Bodenbereich des U-förmigen Profils 34.10 gelangt, gegen die beiden keilartigen Verbreiterungen 222 und dabei auch von oben auf den satteldachförmig nach innen einspringenden Böden 36.10. Beides bewirkt ein Auseinanderdrücken der beiden Wände 42.10, 44.10.

Um lediglich eine Anlage des U-förmigen Profils 34.10 in seinem Bodenbereich an den Innenflächen des U-Profils 20.4 sicherzustellen, besitzt die linke und rechte Wand 42.10, 44.10 in ihrem jeweiligen unteren Wandbereich eine keilartige Verbreiterung 224 nach außen hin, so dass nur im Bereich dieser Verbreiterung 224 die maximale Breite 76.10 des U-förmigen Profils vorhanden ist. Die beiden keilartigen Verbreiterungen 222,224 und ihre Steigungsmaße ergeben sich aus der strichpunktierten Darstellung in Fig. 30.

Im eingesetzten Zustand des U-förmigen Profils 34.10 in dem U-Profil 20.4 und bei zusätzlich vollständigem Einsitzen der Glasscheibe 16 in dem U-förmigen Profil 34.10, welcher Zustand in Fig. 31 dargestellt ist, ist der Boden 36.10 des U-förmigen Profils 34.10 durch sein Flachdrücken nach unten hin in seiner Bodenebene gestaucht, was in Fig. 31 durch eine leichte Wellenbildung verdeutlicht werden soll.

Der Bereich zwischen den beiden Wänden 42.10,44.10 des U-förmigen Profils und den beiden Schenkeln 22.6, 24.6 des U-Profils 20.4 wird durch Keile oder vergleichbare Maßnahmen ausgefüllt und damit die Glasscheibe 16 in dem U-Profil 20.4 kippsicher gehalten, so wie das im Vorstehenden bereits beschrieben ist.

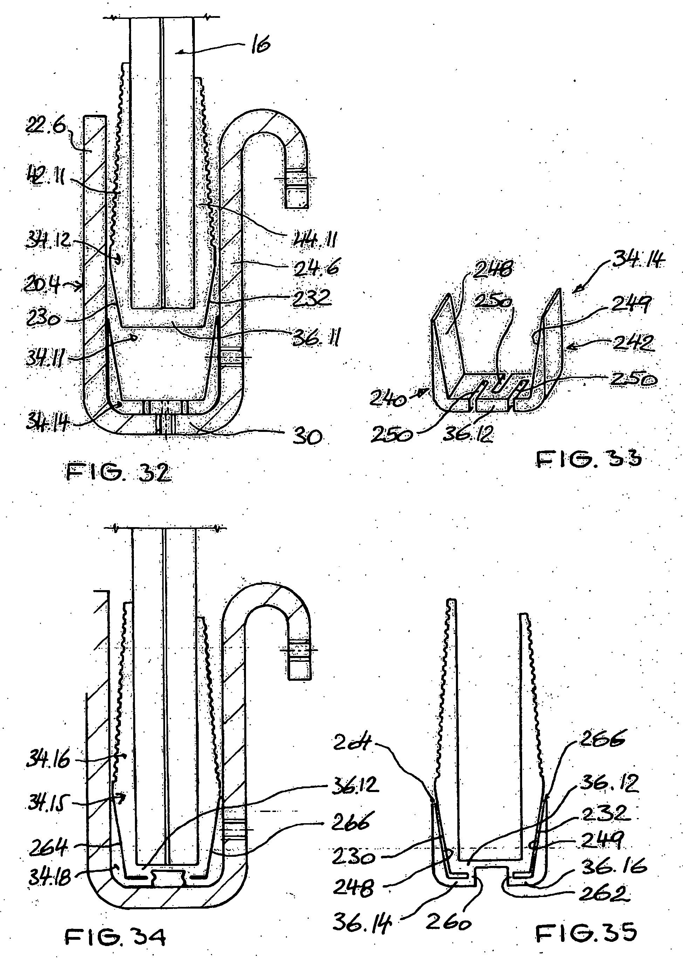

In der Fig. 32 ist ein U-förmiges Profil 34.11 dargestellt, das aus einem inneren U-förmigen Profilteil 34.12 und einem äußeren U-förmigen Profilteil 34.14 besteht. Das U-förmige Profilteil 34.12 entspricht im Wesentlichen den vorstehend beschriebenen U-förmigen Profilteilen. Es dient zum Umhüllen des Bodenbereichs einer in ihm eingesetzten Glasscheibe 16. Durch in diesen Figuren nicht dargestellte Keile wird das innere U-förmige Profilteil 34.12 kippsicher in dem beispielsweise U-Profil 20.4 gehalten, wie das Vorstehend bereits beschrieben ist.

Das U-förmige Profilteil 34.12 besitzt im unteren Bereich seiner beiden Wände 42.11,44.11 eine rechte und linke Keilfläche 230, 232. Die beiden Wände 42.11, 44.11 sind einteilig mit einem Boden 36.11 verbunden.

Im unteren Bereich des U-Profils 20.4 ist das äußere U-förmige Profilteil 34.14 eingesetzt vorhanden. Dieses äußere U-förmige Profilteil 34.14 liegt an den unteren Bereichen der beiden Schenkel 22.6, 24.6 des U-Profils 20.4 sowie an dessem Boden 30 mit geringem seitlichen Spiel an. Dieses äußere U-förmige Profilteil 34.14 besitzt zwei Wände 240, 242, die durch einen Boden 36.12 einteilig miteinander verbunden sind. Die beiden Wände 240, 242 sind nach oben verjüngend ausgebildet und weisen auf ihrer Innenseite jeweils eine Keilfläche 248, 249 auf. Die Neigung dieser Keilflächen 248, 249 entspricht der Neigung der Keilflächen 230, 232 des inneren U-förmigen Profilteils 34.12. Das innere und das äußere Profilteil sind so ausgebildet, dass beim Einschieben des inneren Profilteils 34.12 von oben in das äußere Profilteil 34.14 sich die Keilflächen 230, 232 des inneren Profilteils 34.12 dicht und reibschlüssig an die Keilflächen 248, 249 des äußeren U-förmigen Profilteils 34.14 anlegen. Dadurch kann der untere Bereich des inneren U-förmigen Profilteils 34.12 kippsicher und seitlich unverrückbar in dem U-Profil 20.4 gehalten werden. Der obere Bereich des inneren Profilteils 34.12 kann wiederum durch keilartige Einsätze und dergleichen Maßnahmen, wie sie vorstehend beschrieben sind, kippsicher in dem U-Profil 20.4 gehalten werden.

Beim Ineinanderschieben der beiden U-förmigen Profilteile 34.12, 34.14 werden die beiden Wände 240, 242 des äußeren U-förmigen Profilteils auseinander gedrückt. Der die beiden Wände 240,242 verbindende Boden 36.12 besitzt Längsschlitze 250, die dieses Auseinanderdehnen des Bodens 36.14 in Richtung zu den beiden Wänden 240, 242 hin erlauben. Auf diese Weise wird eine pressende Anlage des äußeren U-förmigen Profilteils 34.14 in dem U-Profil 20.4 sichergestellt.

Das in Fig. 34 und 35 dargestellte U-förmige Profil 34.15 besitzt ebenfalls ein inneres und ein äußeres U-förmiges Profilteil 34.16, 34.18, die im Wesentlichen inneren und äußeren Profilteil 34.12, 34.14 entsprechen. Im Unterschied zu den beiden Profilteilen 34.12,34.14 (Fig. 32, 33) hängen diese beiden Profilteile 34.16, 34.18 aber einteilig aneinander. So sind im Boden 36.12 des inneren U-förmigen Profilteils 34.16 nach unten wegstehende zwei Stege 260, 262 vorhanden, die mit zwei Teilbodenflächen 36.14, 36.16 des äußeren U-förmigen Profilteils 34.18 einteilig aneinander hängen. Zwischen den Keilflächen 230, 232 des inneren Profilteils 34.16 und den Keilflächen 248, 249 des äußeren Profilteils ist im nicht zusammengebauten Zustand ein Schlitz 264, 266 vorhanden, der sich winkelförmig in den Bereich des Bodens fortsetzt. Im eingebauten Zustand, wenn das innere U-förmige Profilteil 34.16 voll von oben in das äußere U-förmige Profilteil eingeschoben ist, wird dieser Schlitz 264, 266 in seinem Abschnitt im Bereich der beiden Wände 240, 242 NULL, denn in diesem Bereich sitzt das innere U-förmige Profilteil reibschlüssig an dem äußeren U-förmigen Profilteil. Im Bereich der Teilbodenfläche 36.14, 36.16 kann dabei eine geringfügige Schlitzausbildung noch vorhanden sein, wie Fig. 34 zu entnehmen ist. Das in Fig. 34 und 35 dargestellte U-förmige Profil 34.15, das aus einem inneren Profilteil 34.16 besteht, an dem einteilig ein äußeres U-förmiges Profilteil 34.18 anhängt, wird also ohne Glasscheibe 16 in das U-Profil 20.4 von oben eingeschoben. Anschließend wird die Glasscheibe 16 voll in das innere U-förmige Profilteil 34.16 eingeschoben. Dabei wird die reibschlüssige feste Lage des inneren Profilteils 34.16 an dem äußeren Profilteil 34.18 einerseits und die feste innere Anlage des äußeren Profilteils 34.18 an den beiden Wänden 22.6, 24.6 des U-Profils 20.4 sichergestellt. Die zur Anlage des äußeren Profilteils 34.18 an den Schenkeln 22.6, 24.6 des U-Profils 20.4 erforderliche Ausdehnung seines Bodens 36.12 wird im vorliegenden Beispielsfall durch eine dünne Bodenausbildung im mittleren Bereich des Bodens 36.12 ermöglicht.

## Patentansprüche

1. Glasscheiben-Geländer (10)
- mit zumindest einer in ihrem Fußbereich (18) in einem U-Profil (20, 20.2, 20.3, 20.4) eingespannt gehaltenen Glasscheibe (16), wobei dieses U-Profil ein formstabiles Profil wie insbesondere ein Stahlprofil ist,
- wobei die Innenseiten der beiden Schenkel (22, 22.2, 22.6, 24, 24.2, 24.6) dieses U-Profils ebenflächig sind,
- wobei der Fußbereich (18) der Glasscheibe (16), zumindest in einem Teilbereich ihrer Längserstreckung, in zumindest einem U-förmigen Profilkörper (34,34.2,34.4,34.5,34.6,34.8,34.10, 34.11,34.15 130,130.3) eingepresst vorhanden ist,
- wobei das U-förmiges Profil (34, 34.2, 34.4, 34.5, 34.6, 34.8, 34.10,34.11,34.15,130,130.3) zwei Wände und einen Boden besitzt, wobei die beiden Wände jeweils einteilig mit dem Boden verbunden oder getrennt zu dem Boden vorhanden sind,
- wobei zwischen Glasscheibe (16) und Schenkel (22, 22.2,22.6, 24, 24.2, 24.6), zumindest in einem Teilbereich, der Längserstreckung der Glasscheibe, ein den Abstand der Glasscheibe (16) vom Schenkel (22, 22.2, 22.6, 24, 24.2, 24.6) aufrecht erhaltender Keil (60, 60.4, 60.6, 61, 62, 62.4, 62.5, 62.6, 63, 154, 156) und/oder Stift (150,152) vorhanden ist,
- wobei die maximale Breite (76) des von dem U-förmigen Profil eingenommenen Raums zwischen den beiden Schenkeln (22,22.2,22.6,24,24.2,24.6) des U-Profils (20, 20.2, 20.3, 20.4), insbesondere im nicht eingesetzten Zustand einer Glasscheibe (16), kleiner ist als der gegenseitige lichte Abstand der beiden Schenkel (22, 22.2, 22.6, 24, 24.2, 24.6) des U-Profils (20, 20.2, 20.3,20.4),
- wobei die Glasscheibe (16) von dem U-förmigen Profil (34, 34.2, 34.4, 34.5, 34.6, 34.8, 34.10, 34.11, 34.15, 130, 130.3) umschlossen ist,
- **dadurch gekennzeichnet, dass**
- die beiden Wände (42,42.3,42.4,42.6,42.10,42.11,44, 44.3, 44.4, 44.6, 44.10, 44.11,132, 132.3, 134, 134.3, 240, 242) des U-förmigen Profils (34,34.2,34.4,34.5,34.6,34.8,34.10,34.11, 34.15,130,130.3) jeweils eine sich nach oben verjüngende Wandstärke besitzen,
- der Boden (36) des U-förmigen Profils (34) eine seitliche linke (38) und rechte Eckabschrägung (40) oder Eckabrundung aufweist.

2. Glasscheiben-Geländer nach Anspruch 1,
- **dadurch gekennzeichnet, dass**
- der Freiraum zwischen Glasscheibe (16) und U-Profil (20, 20.2, 20.3, 20.4) zumindest bereichsweise mit fließ- oder pastenförmiger, aushärtbarer Vergussmasse (160) ausgefüllt vorhanden ist.

3. Glasscheiben-Geländer nach Anspruch 1 oder 2,
- dadurch gekenntzeichnet, dass
- die Kanten des U-Profils (20,20.2, 20.3, 20.4) eckig oder ausgerundet sind.

4. Glasscheiben-Geländer nach einem der vorstehenden Ansprüche,
- **dadurch gekennzeichnet, dass**
- an einem Schenkel (24, 24.2, 24.6) des U-Profils (20, 20.3, 20.4) eine Umbiegung (32,32.2) in Form eines Aufhängerandes ausgebildet ist.

5. Glasscheiben-Geländer nach Anspruch 4,
- **dadurch gekennzeichnet, dass**
- im Endbereich der Umbiegung (32, 32.2) eine Gewindedurchbohrung (116, 204) vorhanden ist.

6. Glasscheiben-Geländer nach einem der vorstehenden Ansprüche,
- **dadurch gekennzeichnet, dass**
- im mittleren Bereich von zumindest dem die Umbiegung (32, 32.2) aufweisenden Schenkel (24, 4.2, 24.6) zumindest eine Gewindebohrung oder Gewindedurchbohrung vorhanden ist.

7. Glasscheiben-Geländer nach einem der vorstehenden Ansprüche,
- **dadurch gekennzeichnet, dass**
- in dem den Boden (36, 36.6, 36.8, 136) bildenden Steg des U-förmigen Profils (34,34.4,34.6,34.8,130) zumindest eine Längsnut (54, 56, 58, 214) vorhanden ist.

8. Glasscheiben-Geländer nach Anspruch 7,
- **dadurch gekennzeichnet, dass**
- auf der Innenseite und auf der Außenseite des Bodens (36, 136) zumindest eine Längsnut (54, 56, 58) vorhanden ist.

9. Glasscheiben-Geländer nach einem der vorstehenden Ansprüche,
- **dadurch gekennzeichnet, dass**
- auf der Innenseite der beiden Eckbereiche vom Boden (36, 36.6, 36.8, 136) und Wand des U-förmigen Profils (34, 34.4, 34.6, 34.8, 130) jeweils eine Längsnut (50, 50.6, 52, 52.6, 218, 220) vorhanden ist.

10. Glasscheiben-Geländer nach Anspruch 1,
- **dadurch gekennzeichnet, dass**
- das U-förmige Profil ein inneres U-förmiges Profilteil (34.12, 34.15) und ein äußeres U-förmiges Profilteil (34.14, 34.18) besitzt,
- das äußere Profilteil zwei Wände (240, 242) und zumindest ein abschnittsweise als Boden ausgebildetes Bodenteil (36.12, 36.14, 36.16) besitzt,
- diese beiden Wände jeweils einteilig mit dem Boden verbunden sind,
- jede dieser beiden Wände des äußeren Profilteils als Keil ausgebildet ist,
- wobei die Innenflächen jeder dieser beiden Keile eine innere Keilfläche (248, 249) bildet,
- das innere Profilteil zwei Wände und einen Boden (36.11, 36.12) besitzt zum Umhüllen des unteren Bereichs einer Glasscheibe (16),
- die beiden Wände (42.11,44.11) dieses inneren Profilteils jeweils einstückig mit dem Boden (36.11, 36.12) verbunden sind,
- die Außenfläche jeder der beiden Wände dieses inneren Profilteils in ihrem unteren Bereich eine Keilfläche (230,232) aufweist, die neigungsmäßig mit der inneren Keilfläche (248, 249) des äußeren Profilteils übereinstimmt, so dass das innere Profilteil in das äußere Profilteil von oben klemmend einsetzbar ist.

11. Glasscheiben-Geländer nach Anspruch 10,
- **dadurch gekennzeichnet, dass**
- der Boden des äußeren U-förmigen Profilteils (34.14) Längsschlitze (250) derart aufweist, dass der Boden in Richtung zu seinen beiden Wänden hin auseinander ziehbar ist.

12. Glasscheiben-Geländer nach Anspruch 10 oder 11,
- **dadurch gekennzeichnet, dass**
- das äußere und das innere U-förmige Profilteil (34.16, 34.18) einteilig aneinander hängen.

13. Glasscheiben-Geländer nach Anspruch 12,
- **dadurch gekennzeichnet, dass**
- von dem Boden (36.12) des inneren U-förmigen Profilteils (34.16) zumindest ein Stegteil (260,262) wegsteht, welches mit dem äußeren U-förmigen Profilteil (34.18) so fest verbunden ist, dass beide U-förmigen Profilteile parallel zur Ebene der Scheibe (16) relativ zueinander verschiebbar sind.

14. Glasscheiben-Geländer nach einem der Ansprüche 7 bis 13,
- **dadurch gekennzeichnet, dass**
- die auf der Außenseite des Bodens des U-förmigen Profils vorhandene Längsnut zumindest im nicht in ein U-Profil eingesetzten Zustand einen ebenflächigen Nutgrund besitzt.

15. Glasscheiben-Geländer nach einem der Ansprüche 7 bis 14,
- **dadurch gekennzeichnet, dass**
- der Boden des U-förmigen Profils (34.8) zumindest im nicht vollständig in ein U-Profil eingesetzten Zustand eine einspringende, insbesondere satteldachförmige Querschnittsform besitzt.

16. Glasscheiben-Geländer nach einem der vorstehenden Ansprüche,
- **dadurch gekennzeichnet, dass**
- das U-förmige Profil aus Kunststoff wie insbesondere aus Polyoxymethylen oder aus einem vergleichbaren Material besteht.

17. Glasscheiben-Geländer nach einem der vorstehenden Ansprüche,
- **dadurch gekennzeichnet, dass**
- das U-förmige Profil ein Strangguss-Profil ist,
- der gegenseitige lichte Abstand (48) der beiden seitlichen Wände des U-förmigen Profils etwas geringer als die Dicke (49) der einsetzbaren Glasscheibe (16) ist.

18. Glasscheiben-Geländer nach Anspruch 17,
- **dadurch gekennzeichnet, dass**
- der gegenseitige lichte Abstand der beiden an eine Glasscheibe anlegbaren seitlichen Wände des U-förmigen Profils in ihrem oberen Bereich kleiner als in ihrem an den Boden angrenzenden unteren Bereich ist.

19. Glasscheiben-Geländer nach einem der vorstehenden Ansprüche,
- **dadurch gekennzeichnet, dass**
- die Keile (60, 60.4, 60.6, 61, 62, 62.4, 62.5, 62.6) aus metallischem Material oder aus druckfestem Kunststoffmaterial bestehen.

20. Glasscheiben-Geländer nach einem der vorstehenden Ansprüche,
- **dadurch gekennzeichnet, dass**
- die an dem U-förmigen Profil anlegbare Innenseite eines Keils (60, 60.4, 60.6, 61, 62, 62.4 62.6, 63) zumindest bereichsweise eine strukturierte, rauhe Oberfläche besitzt.

21. Glasscheiben-Geländer nach einem der vorstehenden Ansprüche,
- **dadurch gekennzeichnet, dass**
- die Außenseite des U-förmigen Profils zumindest bereichsweise eine strukturierte, rauhe Oberfläche besitzt.

22. Glasscheiben-Geländer nach Anspruch 21,
- **dadurch gekennzeichnet, dass**
- die rauhe Oberfläche gewellt oder gezackt ausgebildet ist.

23. Glasscheiben-Geländer nach einem der vorstehenden Ansprüche,
- **dadurch gekennzeichnet, dass**
- an der Außenseite des Keils (63), der an jeweils einem Schenkel des U-Profils anlegbar ist, ein Kunststoffbelag (82) vorhanden ist.

24. Glasscheiben-Geländer nach einem der vorstehenden Ansprüche,
- **dadurch gekennzeichnet, dass**
- an der Außenseite des Keils (60, 60.4, 60.6, 61, 62, 62.4, 62.5, 62.6,63), der an einem Schenkel des U-Profils anlegbar ist, mehrere voneinander beabstandete quer in den Schenkel eintauchende Schlitze oder Nute (70) vorhanden sind.

25. Glasscheiben-Geländer nach einem der vorstehenden Ansprüche,
- dadurch gekerunzeichnet, dass
- eine dauerelastische und/oder eine wasserfeste und/oder eine UV-beständige Abdichtung (86, 88) den Zwischenraum zwischen Scheibe (16) und U-Profil nach oben abschließt.

## Claims

1. Glass-panelled balustrade (10),
- having at least one glass panel (16) which in the foot region (18) of said glass-panelled balustrade (10) is held in a clamped manner in a U-profile (20, 20.2, 20.3, 20.4), this U-profile being a dimensionally stable profile, such as in particular a steel profile,
- wherein the inner sides of the two legs (22, 22.2, 22.6, 24, 24.2, 24.6) of this U-profile have a planar face,
- wherein the foot region (18) of the glass panel (16) at least in one part-region of the longitudinal extent thereof is provided so as to be pressed into at least one U-shaped profiled body (34, 34.2, 34.4, 34.5, 34.6, 34.8, 34.10, 34.11, 34.15, 130, 130.3),
- wherein the U-shaped profile (34, 34.2, 34.4, 34.5, 34.6, 34.8, 34.10, 34.11, 34.15, 130, 130.3) has two walls and a base, the two walls being in each case integrally connected to the base or being provided so as to be separate from the base,
- wherein between the glass panel (16) and the leg (22, 22.2, 22.6, 24, 24.2, 24.6) at least in a part-region of the longitudinal extent of the glass panel a wedge (60, 60.4, 60.6, 61, 62, 62.4, 62.5, 62.6, 63, 154, 156) and/or pin (150, 152) which maintains the spacing of the glass panel (16) from the leg (22, 22.2, 22.6, 24, 24.2, 24.6) is provided,
- wherein the maximum width (76) of the space which is occupied by the U-shaped profile between the two legs (22, 22.2, 22.6, 24, 24.2, 24.6) of the U-profile (20, 20.2, 20.3, 20.4), in particular in the non-inserted state of a glass panel (16), is smaller than the mutual clear spacing of the two legs (22, 22.2, 22.6, 24, 24.2, 24.6) of the U-profile (20, 20.2, 20.3, 20.4)
- wherein the glass panel (16) is enclosed by the U-shaped profile (34, 34.2, 34.4, 34.5, 34.6, 34.8, 34.10, 34.11, 34.15, 130, 130.3) **characterized in that**
- the two walls (42, 42.3, 42.4, 42.6, 42.10, 42.11, 44, 44.3, 44.4, 44.6, 44.10, 44.11, 132, 132.3, 134, 134.3, 240, 242) of the U-shaped profile (34, 34.2, 34.4, 34.5, 34.6, 34.8, 34.10, 34.11, 34.15, 130, 130.3) have a wall thickness in each case which tapers off toward the top,
- the base (36) of the U-shaped profile (34) has a lateral left-hand chamfered edge (38) and a right-hand chamfered edge (40) or rounded edges, respectively.

2. Glass-panelled balustrade according to Claim 1,
**characterized in that**
the free space between the glass panel (16) and the U-profile (20, 20.2, 20.3, 20.4) at least in regions is provided so as to be filled with a liquid or pasty curable grouting component (160).

3. Glass-panelled balustrade according to Claim 1 or 2,
**characterized in that**
the edges of the U-profile (20, 20.2, 20.3, 20.4) are angular or rounded.

4. Glass-panelled balustrade according to one of the preceding claims,
**characterized in that**
a rolled feature (32, 32.2) in the form of a suspension border is configured on one leg (24, 24.2, 24.6) of the U-profile (20, 20.3, 20.4).

5. Glass-panelled balustrade according to Claim 4,
**characterized in that**
a threaded perforation (116, 204) is provided in the end region of the rolled feature (32, 32.2).

6. Glass-panelled balustrade according to one of the preceding claims,
**characterized in that**
at least one threaded bore or threaded perforation is provided in the central region of at least that leg (24, 24.2, 24.6) that has the rolled feature (32, 32.2).

7. Glass-panelled balustrade according to one of the preceding claims,
**characterized in that**
at least one longitudinal groove (54, 56, 58, 214) is provided **in that** web of the U-shaped profile (34, 34.4, 34.6, 34.8, 130) that forms the base (36, 36.6, 36.8, 136).

8. Glass-panelled balustrade according to Claim 7,
**characterized in that**
at least one longitudinal groove (54, 56, 58) is provided on the inner side and on the outer side of the base (36, 136).

9. Glass-panelled balustrade according to one of the preceding claims,
**characterized in that**
in each case one longitudinal groove (50, 50.6, 52, 52.6, 218, 220) is provided on the inner side of the two corner regions of the base (36, 36.6, 36.8, 136) and of the wall of the U-shaped profile (34, 34.4, 34.6, 34.8, 130).

10. Glass-panelled balustrade according to Claim 1,
**characterized in that**
- the U-shaped profile has an inner U-shaped profiled part (34.12, 34.15) and an outer U-shaped profiled part (34.14, 34.18),
- the outer profiled part has two walls (240, 242) and at least one base part (36.12, 36.14, 36.16) which in portions is configured as a base,
- these two walls are in each case integrally connected to the base,
- each of these two walls of the outer profiled part is configured as a wedge,
- wherein the inner faces of each of these two wedges forms an inner wedge face (248, 249),
- the inner profiled part has two walls and one base (36.11, 36.12) for casing the lower region of a glass panel (16),
- the two walls (42.11, 44.11) of this inner profiled part are in each case integrally connected to the base (36.11, 36.12),
- the outer face of each of the two walls of this inner profiled part in the lower region of said walls has a wedge face (230, 232) which in terms of inclination is congruent with the inner wedge face (248, 249) of the outer profiled part, such that the inner profiled part is insertable in a clamping manner from the top into the outer profiled part.

11. Glass-panelled balustrade according to Claim 10,
**characterized in that**
the base of the outer U-shaped profiled part (34.14) has longitudinal slots (250) in such a manner that the base is extendable in the direction of the two walls of the latter.

12. Glass-panelled balustrade according to Claim 10 or 11,
**characterized in that**
the outer and the inner U-shaped profiled parts (34.16, 34.18) are mutually attached in an integral manner.

13. Glass-panelled balustrade according to Claim 12,
**characterized in that**
at least one web part (260, 262) projects from the base (36.12) of the inner U-shaped profiled part (34.16), said web part (260, 262) being fixedly connected to the outer U-shaped profiled part (34.18) such that both U-shaped profiled parts are displaceable in relation to one another in a manner parallel with the plane of the panel (16).

14. Glass-panelled balustrade according to one of Claims 7 to 13,
**characterized in that**
the longitudinal groove which is provided on the outer side of the base of the U-shaped profile, at least in the state in which it is not inserted into a U-profile, has a groove base with a planar face.

15. Glass-panelled balustrade according to one of Claims 7 to 14,
**characterized in that**
the base of the U-shaped profile (34.8), at least in the state in which it is not completely inserted into a U-profile, has a recessed cross-sectional shape, in particular one of a saddleback-roof shape.

16. Glass-panelled balustrade according to one of the preceding claims,
**characterized in that**
the U-shaped profile is composed of plastics, such as in particular polyoxymethylene or a comparable material.

17. Glass-panelled balustrade according to one of the preceding claims,
**characterized in that**
- the U-shaped profile is an extruded profile,
- the mutual clear spacing (48) of the two lateral walls of the U-shaped profile is somewhat smaller than the thickness (49) of the insertable glass panel (16).

18. Glass-panelled balustrade according to Claim 17,
**characterized in that**
the mutual clear spacing of the two lateral walls of the U-shaped profile, which are placeable against a glass panel, in the upper region of said walls is smaller than in the lower region of said walls which is adjacent to the base.

19. Glass-panelled balustrade according to one of the preceding claims,
**characterized in that**
the wedges (60, 60.4, 60.6, 61, 62, 62.4, 62.5, 62.6) are composed of a metallic material or of a pressure-resistant plastics material.

20. Glass-panelled balustrade according to one of the preceding claims,
**characterized in that**
the inner side of a wedge (60, 60.4, 60.6, 61, 62, 62.4, 62.6, 63), which is placeable against the U-shaped profile, at least in regions has a structured and rough surface.

21. Glass-panelled balustrade according to one of the preceding claims,
**characterized in that**
the outer side of the U-shaped profile at least in regions has a structured and rough surface.

22. Glass-panelled balustrade according to Claim 21,
**characterized in that**
the rough surface is configured so as to be undulated or serrated.

23. Glass-panelled balustrade according to one of the preceding claims,
**characterized in that**
a plastics coating (82) is provided on the outer side of the wedge (63) which is in each case placeable against a leg of the U-profile.

24. Glass-panelled balustrade according to one of the preceding claims,
**characterized in that**
on the outer side of the wedge (60, 60.4, 60.6, 61, 62, 62.4, 62.5, 62.6, 63) which is placeable against a leg of the U-profile, a plurality of mutually spaced apart slots or grooves (70) which plunge into the leg in a transverse manner are provided.

25. Glass-panelled balustrade according to one of the preceding claims,
**characterized in that**
a durably elastic and/or watertight and/or UV-resistant seal (86, 88) closes off the intermediate space between the panel (16) and the U-profile towards the top.

## Revendications

1. Garde-corps (10) à panneaux vitrés,
- comprenant au moins un panneau vitré (16) retenu par enserrement dans un profilé en U (20, 20.2, 20.3, 20.4), dans sa zone inférieure (18), ce profilé en U étant un profilé à stabilité de forme tel qu'un profilé en acier, en particulier,
- les faces intérieures des deux branches (22, 22.2, 22.6, 24, 24.2, 24.6) de ce profilé en U étant dotées de surfaces planes,
- la zone inférieure (18) dudit panneau vitré (16) étant enchâssée, au moins dans une région partielle de son étendue longitudinale, dans au moins un corps profilé (34, 34.2, 34.4, 34.5, 34.6, 34.8, 34.10, 34.11, 34.15, 130, 130.3) configuré en U,
- ledit profilé (34, 34.2, 34.4, 34.5, 34.6, 34.8, 34.10, 34.11, 34.15, 130, 130.3) configuré en U comportant deux parois et un fond, les deux parois étant respectivement reliées au fond d'un seul tenant, ou séparées dudit fond,
- une cale (60, 60.4, 60.6, 61, 62, 62.4, 62.5, 62.6, 63, 154, 156) et/ou une cheville (150, 152), maintenant l'espacement entre le panneau vitré (16) et la branche (22, 22.2, 22.6, 24, 24.2, 24.6), étant interposée(s) entre ledit le panneau vitré (16) et ladite branche (22, 22.2, 22.6, 24, 24.2, 24.6), au moins dans une région partielle de l'étendue longitudinale dudit panneau vitré,
- la largeur maximale (76) de l'espace occupé par le profilé configuré en U entre les deux branches (22, 22.2, 22.6, 24, 24.2, 24.6) du profilé en U (20, 20.2, 20.3, 20.4), notamment à l'état non inséré d'un panneau vitré (16), étant plus petite que la distance intérieure séparant mutuellement lesdites deux branches (22, 22.2, 22.6, 24, 24.2, 24.6) dudit profilé en U (20, 20.2, 20.3, 20.4),
- ledit panneau vitré (16) étant ceinturé par ledit profilé (34, 34.2, 34.4, 34.5, 34.6, 34.8, 34.10, 34.11, 34.15, 130, 130.3) configuré en U,
- **caractérisé par le fait que**
- les deux parois (42, 42.3, 42.4, 42.6, 42.10, 42.11, 44, 44.3, 44.4, 44.6, 44.10, 44.11, 132, 132.3, 134, 134.3, 240, 242) du profilé (34, 34.2, 34.4, 34.5, 34.6, 34.8, 34.10, 34.11, 34.15, 130, 130.3), configuré en U, sont respectivement pourvues d'une épaisseur s'amenuisant vers le haut,
- le fond (36) dudit profilé (34) configuré en U présente un biseau latéral d'angle ou un arrondi latéral d'angle, à gauche (38) et à droite (40).

2. Garde-corps (10) à panneaux vitrés, selon la revendication 1,
- **caractérisé par le fait que**
- l'espace libre situé entre le panneau vitré (16) et le profilé en U (20, 20.2, 20.3, 20.4) est comblé, au moins par zones, par une masse de scellement (160) fluide ou pâteuse, apte au durcissement.

3. Garde-corps (10) à panneaux vitrés, selon la revendication 1 ou 2,
- **caractérisé par le fait que**
- les arêtes du profilé en U (20, 20.2, 20.3, 20.4) sont anguleuses ou arrondies.

4. Garde-corps (10) à panneaux vitrés, selon l'une des revendications précédentes,
- **caractérisé par le fait**
- **qu'**un cintrage (32, 32.2) est façonné, sous la forme d'un bord d'accrochage, sur une branche (24, 24.2, 24.6) du profilé en U (20, 20.3, 20.4).

5. Garde-corps (10) à panneaux vitrés, selon la revendication 4,
- **caractérisé par le fait**
- **qu'**un perçage traversant taraudé (116, 204) est pratiqué dans la région extrême du cintrage (32, 32.2).

6. Garde-corps (10) à panneaux vitrés, selon l'une des revendications précédentes,
- **caractérisé par le fait**
- **qu'**au moins un perçage taraudé, ou un perçage traversant taraudé, est pratiqué dans la région centrale d'au moins la branche (24, 24.2, 24.6) munie du cintrage (32, 32.2).

7. Garde-corps (10) à panneaux vitrés, selon l'une des revendications précédentes,
- **caractérisé par le fait**
- **qu'**au moins une rainure longitudinale (54, 56, 58, 214) est pratiquée dans la membrure du profilé (34, 34.4, 34.6, 34.8, 130), configuré en U, qui matérialise le fond (36, 36.6, 36.8, 136).

8. Garde-corps (10) à panneaux vitrés, selon la revendication 7,
- **caractérisé par le fait**
- **qu'**au moins une rainure longitudinale (54, 56, 58) est pratiquée à la face intérieure et à la face extérieure du fond (36, 136).

9. Garde-corps (10) à panneaux vitrés, selon l'une des revendications précédentes,
- **caractérisé par le fait**
- **qu'**une rainure longitudinale respective (50, 50.6, 52, 52.6, 218, 220) est pratiquée à la face intérieure des deux zones d'angle du fond (36, 36.6, 36.8, 136) et de la paroi du profilé (34, 34.4, 34.6, 34.8, 130) configuré en U.

10. Garde-corps (10) à panneaux vitrés, selon la revendication 1,
- **caractérisé par le fait que**
- le profilé configuré en U comprend une partie profilée intérieure (34.12, 34.15), configurée en U, et une partie profilée extérieure (34.14, 34.18) configurée en U,
- la partie profilée extérieure comporte deux parois (240, 242) et au moins une partie inférieure (36.12, 36.14, 36.16) réalisée, par zones, sous la forme d'un fond,
- ces deux parois sont respectivement reliées audit fond d'un seul tenant,
- chacune de ces deux parois de ladite partie profilée extérieure est réalisée sous la forme d'un coin,
- les faces internes de chacun de ces deux coins constituant une surface cunéiforme intérieure (248, 249),
- ladite partie profilée intérieure comporte deux parois et un fond (36.11, 36.12), de manière à envelopper la région inférieure d'un panneau vitré (16),
- les deux parois (42.11, 44.11) de cette partie profilée intérieure sont respectivement reliées audit fond (36.11, 36.12) d'un seul tenant,
- la face externe de chacune des deux parois de cette partie profilée intérieure présente, dans sa région inférieure, une surface cunéiforme (230, 232) dont l'inclinaison coïncide avec celle de ladite surface cunéiforme intérieure (248, 249) de la partie profilée extérieure, de façon telle que ladite partie profilée intérieure puisse être insérée de haut en bas dans ladite partie profilée extérieure, avec effet de coincement.

11. Garde-corps (10) à panneaux vitrés, selon la revendication 10,
- **caractérisé par le fait que**
- le fond de la partie profilée extérieure (34.14) configurée en U est muni de fentes longitudinales (250), de façon telle que ledit fond puisse être dissocié par traction exercée en direction de ses deux parois.

12. Garde-corps (10) à panneaux vitrés, selon la revendication 10 ou 11,
- **caractérisé par le fait que**
- les parties profilées extérieure et intérieure (34.16, 34.18), configurées en U, sont attenantes en un ensemble monobloc cohérent.

13. Garde-corps (10) à panneaux vitrés, selon la revendication 12,
- **caractérisé par le fait**
- **qu'**au moins une zone de membrure (260, 262), faisant saillie au-delà du fond (36.12) de la partie profilée intérieure (34.16) configurée en U, est reliée rigidement à la partie profilée extérieure (34.18) configurée en U, de telle sorte que les deux parties profilées, configurées en U, puissent coulisser l'une par rapport à l'autre parallèlement au plan du panneau (16).

14. Garde-corps (10) à panneaux vitrés, selon l'une des revendications 7 à 13,
- **caractérisé par le fait que**
- la rainure longitudinale, pratiquée à la face extérieure du fond du profilé configuré en U, présente un fond à surface plane au moins à l'état non inséré dans un profilé en U.

15. Garde-corps (10) à panneaux vitrés, selon l'une des revendications 7 à 14,
- **caractérisé par le fait que**
- le fond du profilé (34.8) configuré en U présente, au moins à l'état non intégralement inséré dans un profilé en U, une section transversale rentrante revêtant, en particulier, la forme d'une toiture à deux versants.

16. Garde-corps (10) à panneaux vitrés, selon l'une des revendications précédentes,
- **caractérisé par le fait que**
- le profilé configuré en U est constitué d'une matière plastique telle que du polyoxyméthylène, en particulier, ou d'un matériau comparable.

17. Garde-corps (10) à panneaux vitrés, selon l'une des revendications précédentes,
- **caractérisé par le fait que**
- le profilé configuré en U est un profilé venu d'extrusion,
- la distance intérieure (48), séparant mutuellement les deux parois latérales dudit profilé configuré en U, étant légèrement plus petite que l'épaisseur (49) du panneau vitré (16) apte à l'insertion.

18. Garde-corps (10) à panneaux vitrés, selon la revendication 17,
- **caractérisé par le fait que**
- la distance intérieure, séparant mutuellement les deux parois latérales du profilé configuré en U qui peuvent être mises en applique contre un panneau vitré, est plus petite, dans leur région supérieure, que dans leur région inférieure limitrophe du fond.

19. Garde-corps (10) à panneaux vitrés, selon l'une des revendications précédentes,
- **caractérisé par le fait que**
- les cales (60, 60.4, 60.6, 61, 62, 62.4, 62.5, 62.6) sont constituées d'un matériau métallique ou d'une matière plastique résistant à la pression.

20. Garde-corps (10) à panneaux vitrés, selon l'une des revendications précédentes,
- **caractérisé par le fait que**
- la face interne d'une cale (60, 60.4, 60.6, 61, 62, 62.4, 62.6, 63), pouvant être mise en applique contre le profilé configuré en U, est pourvue d'une surface rugueuse structurée, au moins par zones.

21. Garde-corps (10) à panneaux vitrés, selon l'une des revendications précédentes,
- **caractérisé par le fait que**
- la face externe du profilé configuré en U est pourvue d'une surface rugueuse structurée, au moins par zones.

22. Garde-corps (10) à panneaux vitrés, selon la revendication 21,
- **caractérisé par le fait que**
- la surface rugueuse est de réalisation ondulée ou dentelée.

23. Garde-corps (10) à panneaux vitrés, selon l'une des revendications précédentes,
- **caractérisé par le fait**
- **qu'**un revêtement (82) en matière plastique est présent à la face externe de la cale (63) qui peut être mise en applique contre une branche respective du profilé en U.

24. Garde-corps (10) à panneaux vitrés, selon l'une des revendications précédentes,
- **caractérisé par le fait que**
- plusieurs fentes ou rainures (70), pratiquées à la face externe de la cale (60, 60.4, 60.6, 61, 62, 62.4, 62.5, 62.6, 63) qui peut être mise en applique contre une branche du profilé en U, sont distantes les uns des autres et pénètrent transversalement dans ladite branche.

25. Garde-corps (10) à panneaux vitrés, selon l'une des revendications précédentes,
- **caractérisé par le fait**
- **qu'**une garniture d'étanchement (86, 88) douée d'élasticité permanente et/ou résistant à l'eau et/ou résistant aux UV assure l'obturation, vers le haut, de l'espace interstitiel entre le panneau (16) et le profilé en U.
